# FASCICULE DE BREVET EUROPEEN

(11) **EP 2 821 279 B1**
(45) Date de publication et mention de la délivrance du brevet: **07.06.2017**
(21) Numéro de dépôt: 14175421.8
(22) Date de dépôt: 02.07.2014
(51) Int. Cl.: B60L 11/18

(54) **Système de charge électrique d'une pluralité de véhicules électriques et procédé de répartition de la puissance électrique délivrée par une alimentation électrique d'un tel système**
Elektrisches Aufladesystem einer Vielzahl von elektrischen Fahrzeugen, und Verteilungsverfahren der elektrischen Leistung, die durch eine elektrische Stromversorgung eines solchen Systems geliefert wird
System for electrically charging a plurality of electric vehicles and method for distributing the electric power output by an electric power supply of such a system

(30) Priorité: 03.07.2013 FR 1356493
(43) Date de publication de la demande: 07.01.2015
(73) Titulaire: Schneider Electric Industries SAS, 92500 Rueil-Malmaison (FR)
(72) Inventeur: Chevalley, Christian, 38050 Grenoble Cedex 09 (FR); Ricaud, Claude, 38050 Grenoble Cedex 09 (FR)
(74) Mandataire: Lavoix

(56) Documents cités:
- WO-A1-2012/149965
- US-A- 4 383 210
- US-A1- 2011 109 266

## Description

La présente invention concerne un système de charge électrique d'une pluralité de véhicules électriques, ainsi qu'un procédé de répartition de la puissance électrique délivrée par une alimentation électrique d'un tel système.

Dans un système de charge d'une flotte de véhicules électriques, la puissance délivrée est limitée par la puissance souscrite auprès des fournisseurs d'énergie et par la puissance installée. La puissance installée correspond au dimensionnement des câbles électriques du système et des calibres de protection, tels que des disjoncteurs, contre les surintensités.

De plus, pour réduire les pics de consommation, les fournisseurs d'énergie pratiquent des incitations tarifaires pour que, par exemple, leurs clients décalent dans le temps leur consommation.

Un enjeu persistant dans le domaine des systèmes de charge électrique d'une flotte de véhicules électriques est donc d'adapter la puissance délivrée par des bornes de charge.

Il est ainsi connu de sur-dimensionner le système de charge ou d'augmenter la puissance souscrite pour être capable de recharger le plus rapidement possible chaque véhicule électrique connecté au système, et ceci, quel que soit le nombre de véhicules électriques. Ceci implique des surcoûts importants, puisque le système est dimensionné pour un cas extrême, où chacune des bornes de charge du système est connectée à un véhicule électrique et délivre au véhicule électrique la puissance électrique maximale qu'il est propre à recevoir.

Des systèmes de charge permettant d'adapter la puissance délivrée par des bornes de charge, comme selon le préambule de la revendication 1, sont également connus de US 2011/109266 A1.

Par ailleurs, il est aussi connu de réaliser une gestion manuelle des mises en charge des véhicules électriques, mais ceci entraine un risque de surcharge électrique et de disjonction, et reste complexe en termes de main d'oeuvre.

De plus, dans le domaine des gestionnaires d'énergie pour des systèmes de supervision de la consommation de bâtiments, il est connu d'utiliser des dispositifs de délestage, qui permettent lorsque la consommation est supérieure à la puissance souscrite auprès d'un fournisseur d'énergie, ou lorsque l'on veut réduire la consommation du bâtiment, de délester certains départs, c'est-à-dire de couper l'alimentation électrique délivrée à certaines parties du bâtiment. Appliqué au domaine de la charge de véhicules électriques, ceci revient à couper l'alimentation électrique de certaines bornes lorsqu'on veut réduire la consommation du système de charge. Cependant, il est connu qu'un véhicule électrique ne supporte pas plus de trois interruptions dans un cycle de charge, alors qu'un dispositif de délestage est propre à couper le cycle de charge en coupant l'alimentation électrique d'une borne. Il y a donc un risque de détérioration si le délestage est trop fréquent. De plus, ce type de système ne s'adapte pas automatiquement au nombre de véhicules électriques connectés au système.

Le but de l'invention est donc de proposer un système de charge électrique d'une pluralité de véhicules électriques peu coûteux, peu complexe à mettre en oeuvre et à réaliser et permettant d'utiliser simultanément toutes les bornes du système de charge, en limitant à une puissance prédéterminée, telle que la puissance souscrite auprès d'un fournisseur d'énergie, la puissance totale fournie aux véhicules électriques connectés au système.

A cet effet, l'invention a pour objet un système de charge électrique d'une pluralité de véhicules électriques lequel système comprend :
- une alimentation électrique propre à délivrer une puissance électrique maximale,
- une pluralité de bornes de charge, chacune étant propre à être connectée à un véhicule électrique et à recharger une batterie dudit véhicule électrique, ainsi qu'à délivrer plusieurs niveaux de puissance électrique, chaque borne de charge étant connectée, via une ligne électrique correspondante, à l'alimentation électrique,
- pour chaque borne de charge, un organe de commande du niveau de puissance électrique délivré par la borne de charge au véhicule électrique connecté à celle-ci, l'organe de commande étant propre à transmettre un signal de commande à la borne de charge correspondante, ledit niveau de puissance électrique délivré étant fonction dudit signal de commande.

Conformément à l'invention, les organes de commande sont reliés les uns aux autres par des liaisons de communication et sont propres à commander la répartition de la puissance maximale entre les bornes de charge en fonction du temps et du nombre de véhicules électriques connectés aux bornes de charge et requérant une charge.

Grâce à l'invention, une répartition de la première puissance maximale délivrée par l'alimentation électrique du système de charge électrique est faite entre les bornes de charge, et varie en fonction du temps et du nombre de véhicules électriques connectés aux bornes de charge. Il est ainsi possible de maximiser en permanence la puissance délivré par chaque borne de charge à un véhicule électrique connecté à celle-ci, et d'utiliser simultanément toutes les bornes du système de charge, en adaptant la puissance délivrée par chaque borne au nombre de véhicules connectés au système de charge.

Selon d'autres aspects avantageux de l'invention, le système de charge électrique comprend en outre une ou plusieurs des caractéristiques suivantes, prises isolément ou selon toutes les combinaisons techniquement admissibles :
- chaque organe de commande est relié, via les liaisons de communication, à deux organes de commande, l'ensemble des organes de commande formant une liaison chainée, correspondant à une boucle de communication fermée,
- la communication entre les organes de commande est une communication de type point à point, alors que les organes de commande sont propres à être configurés en maître ou en esclave, et tandis que le système ne comprend qu'un seul organe de commande configuré en maître,
- l'organe de commande configuré en maître est connecté à un compteur électrique, tandis qu'en fonction d'informations reçues du compteur électrique, l'organe de commande configuré en maître est propre à communiquer avec les organes de commande configurés en esclave afin de modifier la puissance maximale consommable par l'installation en modifiant la répartition de la puissance maximale,
- le système comprend une liaison électrique bidirectionnelle entre chaque borne de charge et chaque organe de commande correspondant, alors que la borne de charge est propre à indiquer à l'organe de commande correspondant qu'un véhicule électrique lui est raccordé et que le véhicule électrique requiert la charge de sa batterie,
- chaque organe de commande comprend un capteur de courant (24) propre à mesurer le courant traversant la ligne électrique correspondante et à détecter la connexion d'un véhicule à la borne de charge correspondante et la charge dudit véhicule en fonction de la valeur dudit courant,
- chaque borne de charge comprend l'organe de commande correspondant.

L'invention a également pour objet un procédé de répartition de la puissance électrique délivrée par une alimentation électrique d'un système de charge électrique d'une pluralité de véhicules électriques, l'alimentation électrique étant propre à délivrer une puissance électrique maximale, le système de charge comprenant : une pluralité de bornes de charge, chacune étant propre à être connectée à un véhicule électrique et à recharger une batterie dudit véhicule électrique, ainsi qu'à délivrer plusieurs niveaux de puissance électrique, chaque borne de charge étant connectée, via une ligne électrique correspondante, à l'alimentation électrique, et pour chaque borne de charge, un organe de commande du niveau de puissance électrique délivrée par la borne de charge à un véhicule électrique connecté à celle-ci. Le procédé comprenant l'étape suivante :
- a) la transmission par chaque organe de commande d'un signal de commande à la borne de charge correspondante, ledit niveau de puissance électrique délivré étant fonction dudit signal de commande.

Conformément à l'invention, le procédé comprend les étapes suivantes :
- b) l'établissement d'une communication entre les organes de commande via des liaisons de communication,
- c) la commande par les organes de commandes de la répartition de la puissance maximale entre les bornes de charge en fonction du temps et du nombre de véhicules électriques connectés aux bornes de charge et requérant une charge.

Suivant d'autres aspects avantageux de l'invention, le procédé de répartition de la puissance électrique comprend en outre une ou plusieurs des caractéristiques suivantes, prises isolément ou selon toutes les combinaisons techniquement admissibles :
- au cours de l'étape a) chaque organe de commande, commande la borne de charge correspondante via le signal de commande de manière à ce que la borne de charge correspondante délivre au moins une puissance électrique minimale lorsqu'un véhicule est connecté à celle-ci et requiert la charge de sa batterie,
- au cours de l'étape b) des jetons de charge sont générés alors qu'au cours des étapes b) et c) les jetons de charge circulent entre les organes de commande sur les liaisons de communication, tandis qu'à chaque jeton de charge est associée une puissance partielle, correspondant à une subdivision de la puissance maximale, la somme des puissances partielles associées aux jetons de charge étant inférieure ou égale à la puissance maximale,
- au cours de l'étape c), lorsqu'un organe de commande reçoit un jeton de charge, il utilise le jeton de charge reçu seulement s'il utilise déjà un nombre de jetons de charge inférieur à un nombre maximal autorisé et lorsque la borne de charge correspondante est connectée à un véhicule électrique qui requiert la charge de sa batterie, alors que dans le cas contraire l'organe de commande transmet le jeton de charge à un autre organe de commande via les liaisons de communication,
- lorsqu'au cours de l'étape c) un organe de commande utilise un jeton de charge, alors il le conserve pendant un temps d'allocation prédéterminé avant de le retransmettre à un autre organe de commande via les liaisons de communication et il alloue, via le signal de commande, la puissance partielle correspondante, à la borne de charge correspondante pendant le temps d'allocation,
- chaque organe de commande est relié, via les liaisons de communication, à deux organes de commande, l'ensemble des organes de commande formant une liaison chainée, correspondant à une boucle de communication fermée, tandis qu'au cours des étapes b) et c), les jetons de charge circulent dans un sens unique entre les organes de commande via les liaisons de communication,
- au cours de l'étape c), si un organe de commande détecte le démarrage de la charge d'une batterie d'un véhicule électrique connecté à la borne de charge correspondante ou la fin de la charge de la batterie dudit véhicule électrique, un jeton de synchronisation est transmis par l'organe de commande aux autres organes de commande, le jeton de synchronisation circulant dans un sens unique entre les organes de commande, alors que lors de la réception du jeton de synchronisation les organes de commande qui détiennent un jeton de charge réinitialisent le temps d'allocation à un temps de latence et conservent encore le jeton de charge pendant le temps de latence, le jeton de synchronisation étant transmis d'organe de commande en organe de commande,
- le jeton de synchronisation est détruit par l'organe de commande, qui a généré le jeton de synchronisation, lorsqu'il reçoit le jeton de synchronisation.

L'invention sera mieux comprise et d'autres avantages de celle-ci apparaitront plus clairement à la lumière de la description qui va suivre, donnée uniquement à titre d'exemple non limitatif, et faite en se référant aux dessins annexés, sur lesquels :
- la figure 1 est une représentation schématique d'un système de charge électrique d'une pluralité de véhicules électriques, selon un premier mode de réalisation de l'invention ;
- la figure 2 est un organigramme représentant les relations entre différents régimes de fonctionnement d'organes de commande appartenant au système de la figure 1, lors de l'application d'un procédé de répartition de la puissance conforme à l'invention ;
- la figure 3 est un organigramme représentant les différentes étapes réalisées par un organe de commande configuré en maître, lors d'un régime de fonctionnement en initialisation et lors de l'application du procédé de répartition de la puissance conforme à l'invention ;

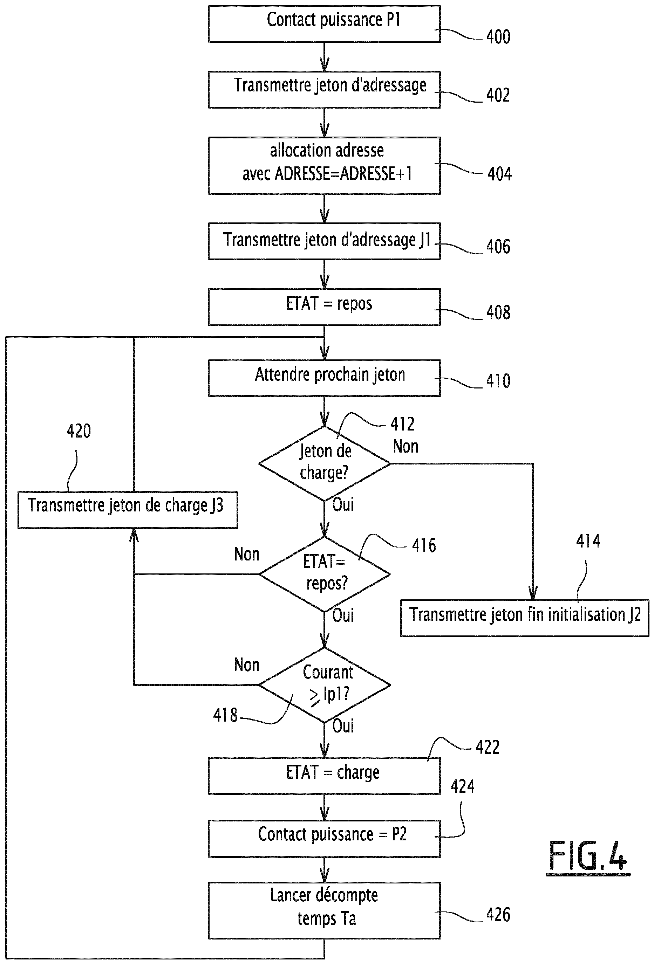

- la figure 4 est un organigramme représentant les différentes étapes réalisées par un organe de commande configuré en esclave, lors d'un régime de fonctionnement en initialisation et, selon le procédé de répartition de la puissance conforme à l'invention ;
- la figure 5 est un organigramme représentant le passage d'un mode de fonctionnement à l'autre réalisé par chaque organe de commande, lors d'un régime de fonctionnement nominal et selon le procédé de répartition de la puissance conforme à l'invention ;
- la figure 6 est un organigramme représentant les différentes étapes réalisées par chaque organe de commande, lors d'un régime de fonctionnement nominal et en mode repos ;
- la figure 7 est un organigramme représentant les différentes étapes réalisées par chaque organe de commande, lors d'un régime de fonctionnement nominal et en mode attente ;
- la figure 8 est un organigramme représentant les différentes étapes réalisées par chaque organe de commande, lors d'un régime de fonctionnement nominal et en mode charge ;
- la figure 9 est une vue analogue à celle de la figure 1 selon un deuxième mode de réalisation de l'invention ; et
- la figure 10 est une vue analogue à celle de la figure 1 selon un troisième mode de réalisation de l'invention.

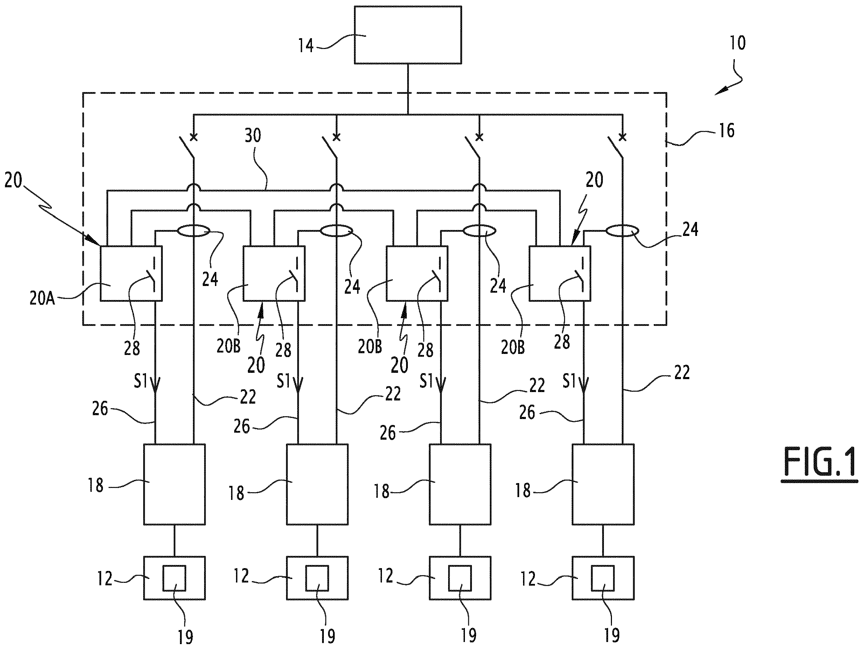

Sur la figure 1, un système 10 de charge électrique d'une pluralité de véhicules électriques 12 comprend une alimentation électrique 14, un tableau électrique 16 et quatre bornes de charge 18.

Dans l'exemple de la figure 1, quatre véhicules électriques 12 sont chacun connectés à une borne de charge 18 différente et comprennent chacun une batterie électrique 19 ainsi qu'un chargeur, non représenté, propre à charger la batterie 19 correspondante grâce à un courant que le chargeur reçoit de la borne de charge 18 correspondante.

L'alimentation électrique 14 est connectée aux bornes de charge 18 suivant une configuration en étoile. L'alimentation électrique 14 est propre à délivrer une première puissance électrique maximale P1 max aux bornes de charge 18, la première puissance maximale P1 max correspondant à une puissance totale que l'alimentation électrique 14 est propre à fournir aux bornes de charge 18. La première puissance maximale P1 max correspond généralement à une puissance totale souscrite auprès d'un distributeur d'énergie ou imposée par le distributeur d'énergie.

Le tableau électrique 16 comprend un organe de commande 20 pour chaque borne de charge 18, l'organe de commande 20 étant configurable en maître ou esclave à l'aide d'un dispositif de réglage, non représenté, tel qu'un interrupteur mobile à deux positions. Plus précisément, le tableau électrique 16 comprend un seul organe de commande 20A configuré en maître, également appelé organe de commande maître 20A, le reste des organes de commande étant des organes de commande 20B configurés en esclave, également appelés organes de commande esclaves 20B.

Chaque borne de charge 18 est propre à être connectée à un véhicule électrique 12 et à recharger la batterie 19 du véhicule 12 via le chargeur correspondant. Chaque borne 18 est également propre à délivrer plusieurs niveaux de puissance électrique. Chaque borne de charge 18 est, par exemple, apte à délivrer deux niveaux de puissance, c'est-à-dire un premier niveau de puissance P1 et un deuxième niveau de puissance P2, de valeur supérieure à celle du premier niveau de puissance P1.

Chaque borne de charge 18 est reliée via une première ligne électrique 22 correspondante à l'alimentation électrique 14.

Chaque organe de commande 20 comprend un capteur de courant 24 propre à mesurer le courant traversant la ligne électrique 22 correspondante.

Chaque organe de commande 20 est relié via une deuxième ligne électrique 26 correspondante à la borne de charge 18 correspondante.

Chaque organe de commande comprend un contact 28.

Les organes de commande 20 sont connectés entre eux via des liaisons de communication 30. Plus précisément, chaque organe de commande 20 est relié, via deux liaisons de communication 30, à deux organes de commande 20 correspondant à un organe de commande précédent et à un organe de commande suivant. L'ensemble des organes de commande 20 forme ainsi une liaison chainée correspondant à une boucle de communication fermée. Les organes de commande 20communiquent donc en réseau.

Les organes de commande 20 sont propres via leur contact 28 et la deuxième ligne électrique 26 à piloter la borne de charge 18 correspondante. Les organes de commande 20 sont plus particulièrement propres à commander la répartition de la première puissance maximale P1 max issue de l'alimentation électrique 14 entre les bornes de charge 18, en fonction du temps et du nombre de véhicules électriques 12 connectés aux bornes de charge 18 et requérant une charge. Un véhicule requiert une charge lorsque la batterie 19 correspondante n'est pas chargée et que la borne de charge 18 correspondante est propre à délivrer au moins le premier niveau de puissance P1.

Chaque organe de commande 20 est identifié à l'aide d'une adresse qui lui est propre.

Le premier niveau de puissance P1 correspond à la puissance minimale délivrée par une borne de charge 18 pour ne pas interrompre un cycle de charge en cours. Il correspond aussi à la puissance délivrée pour permettre le démarrage d'un cycle de charge dès qu'un véhicule électrique 12 est connecté à la borne de charge 18. Le premier niveau de puissance P1 est par exemple égal à 1,5 kilowatts (kW).

Le deuxième niveau de puissance P2 correspond à une puissance délivrée par une borne de charge 18 pour optimiser le temps de charge du véhicule électrique 12 connecté à celle-ci. La valeur du deuxième niveau de puissance P2 est supérieure à celle du premier niveau de puissance P1. Le deuxième niveau de puissance P2 est, par exemple, compris entre 3 kW et 22 kW.

Chaque contact 28 est propre à piloter via un signal de commande S1 la borne de charge correspondante. Le contact 28 est mobile entre une première position correspondant au premier niveau de puissance P1 et une deuxième position correspondant au deuxième niveau de puissance P2. Dans sa première position, le contact mobile 28 est ainsi propre à commander une charge au premier niveau de puissance P1 et dans sa deuxième position le contact mobile 28 est propre à commander une charge au deuxième niveau de puissance P2.

Le signal de commande S1 est transmis via la deuxième ligne électrique 26.

Chaque borne de charge 18 est à tout instant propre à délivrer le premier niveau de puissance P1 si un véhicule 12 est connecté à celle-ci et requiert une charge de sa batterie 19. En effet, avant qu'un véhicule se connecte à chaque borne de charge 18 le contact mobile 28 correspondant est dans sa première position et autorise une charge au premier niveau de puissance P1. Le premier niveau de puissance P1 est donc alloué à chaque borne de charge 18 par défaut, et lors de la connexion d'un véhicule électrique 12, la borne de charge 18 consomme au moins une puissance équivalente au premier niveau de puissance P1 une fois que la charge est autorisée par le véhicule 12 et que le cycle de charge démarre.

Chaque capteur de courant 24 permet de déterminer si la borne de charge 18 correspondante est connectée à un véhicule 12 et effectue un cycle de charge ou non. En effet, lorsqu'une borne de charge 18 est libre, c'est-à-dire connectée à aucun véhicule 12, ou lorsque qu'elle est connectée à un véhicule 12 mais qu'aucun cycle de charge n'est en cours puisque ledit véhicule 12 ne requiert pas de charge, elle consomme un troisième niveau de puissance Pb très inférieur au premier niveau de puissance P1 et au deuxième niveau de puissance P2, qui sont délivrés par la borne de charge 18 lorsqu'un véhicule est connecté à celle-ci et en charge. Le troisième niveau de puissance Pb est, par exemple, égal à quelques dizaines de watts. Plus généralement, le troisième niveau de puissance Pb a une valeur inférieure à quelques pourcents, par exemple 3%, de la valeur du premier niveau de puissance P1.

Le nombre maximal N de véhicules électriques 12 propres à être simultanément alimentés avec le deuxième niveau de puissance P2 est calculé avec la formule suivante :
N = (P1max - Pb X B - P1 X B) / (P2 - P1), avec B le nombre total de bornes de charge 18, le troisième niveau de puissance Pb étant négligeable devant le premier et le deuxième niveau de puissance P1, P2.

Sachant que le troisième niveau de puissance Pb est très inférieur au premier niveau de puissance P1, l'organe de commande 20 ne tiendra pas compte du troisième niveau de puissance Pb consommée par chaque borne de charge 18 dans la suite de la description.

Le nombre maximal N est paramétré dans l'organe de commande maître 20A, par exemple à l'aide d'une roue codeuse, non représentée. En variante, le nombre maximal N est calculé par une unité de calcul, non représentée, appartenant au système 10.

Suivant la position du contact mobile 28, le signal de commande S1 est à l'état haut, correspondant au premier niveau de puissance P1, ou à l'état bas correspondant au deuxième niveau de puissance P2, et le niveau autorisé de puissance délivrée par la borne de charge 18 correspondante est alors le premier niveau de puissance P1 ou le deuxième niveau de puissance P2. Ainsi, lorsque le contact mobile 28 est dans la première position, correspondant à l'état haut du signal S1, la borne de charge 18 correspondante transmet une consigne de charge lente au véhicule électrique 12 connecté à celle-ci et lorsque le contact mobile 28 est dans la deuxième position, correspondant à l'état bas du signal S1, la borne de charge 18 correspondante transmet une consigne de charge rapide au véhicule électrique 12 connecté à celle-ci.

En variante, la notion d'état bas et d'état haut étant conventionnelle, l'état haut du signal de commande S1 correspond au premier niveau de puissance P1 et l'état bas du signal de commande S1 correspond au deuxième niveau de puissance P2.

Au cours du procédé de répartition de la puissance électrique délivrée par le système de charge 10 aux véhicules électriques 12, afin de réaliser la communication entre les organes de commande via les liaisons de communication 30 et de répartir la première puissance maximale P1 max entre les bornes de charge 18, chaque organe de commande 20 connaît deux régimes de fonctionnement possibles, un régime d'initialisation R1 et un régime nominal R2 et quatre types de jetons J1, J2, J3, J4 circulent sur le réseau de communication, formé par les organes de commande 20 et les liaisons de communication 30.

Le régime d'initialisation R1 correspond au démarrage du système 10, à la mise sous tension des organes de commande 20.

Le régime nominal R2 correspond au régime de fonctionnement de chaque organe de commande 20 une fois qu'il est sorti de son régime d'initialisation.

Les jetons J1, J2, J3, J4 circulent sur les liaisons de communication 30 dans un seul sens.

Les quatre types de jeton sont :
- un jeton d'adressage J1 créé par l'organe de commande maître 20A lors du régime d'initialisation R1. Le jeton d'adressage comprend une première variable ADRESSE et permet à chaque organe de commande de s'affecter automatiquement une adresse dans le réseau de communication. L'adressage des organes de commande 20 est nécessaire pour identifier individuellement les organes de commande 20. Le jeton d'adressage J1 est détruit par l'organe de commande maître 20A lorsqu'il le reçoit en retour, après qu'il soit passé par tous les autres organes de commande 20, c'est-à-dire par tous les organes de commande esclaves 20B,
- un jeton de fin d'initialisation J2 créé par l'organe de commande maître 20A et transmis par chaque organe de commande 20 à l'organe de commande 20 suivant à la fin de leur régime d'initialisation R1. Le jeton de fin d'initialisation J2 permet à chaque organe de commande 20 de signaler à l'organe de commande 20 suivant qu'il a terminé son initialisation. Le jeton de fin d'initialisation est détruit par l'organe de commande maître 20A quand il le reçoit en retour, après qu'il ait transité par tous les organes de commande esclaves 20B,
- des jetons de charge J3 créés par l'organe de commande maître 20A. Chaque jeton de charge J3 comprend une valeur de puissance partielle P' égale à la différence entre le deuxième niveau de puissance P2 et le premier niveau de puissance P1. Plus précisément, la première puissance maximale P1 max est divisée en tranches de puissance, la valeur de chacune étant égale au premier niveau de puissance P1 ou à la valeur de la puissance partielle P'. On a ainsi comme vu précédemment en négligeant le troisième niveau de puissance Pb : P1 max = N x P' + B x P1. Chaque puissance partielle P' est associée à un jeton de charge J3 propre à circuler via les liaisons de communication 30. A chaque jeton de charge J3 est associé également un temps d'allocation Ta, correspondant au temps pendant lequel l'organe de commande 20, lorsqu'il reçoit le jeton de charge, est propre à l'utiliser et le conserver. Plus précisément le temps d'allocation Ta correspond au temps pendant lequel l'organe de commande est propre à conserver le jeton de charge J3 et à allouer à la borne de charge 18 correspondante la puissance partielle P' supplémentaire. En effet, lorsqu'il utilise et conserve un jeton de charge J3, l'organe de commande 20 indique à la borne de charge 18 correspondante, en changeant la position du contact mobile 28 et en le déplaçant vers sa deuxième position, qu'elle est autorisée à délivrer le deuxième niveau de puissance P2,
- un jeton de synchronisation J4 créé par un des organes de commande 20 au démarrage et à l'achèvement d'un cycle de charge sur la borne de charge 18 correspondante. En effet, cet évènement entraine une nouvelle répartition des jetons de charge J3 dès lors que le nombre de véhicules 12 en charge au premier P1 ou au deuxième P2 niveau de puissance augmente ou diminue. A la réception du jeton de synchronisation J4 tous les organes de commande 20 dont les bornes de charge 18 correspondantes sont en charge avec le deuxième niveau de puissance P2 réinitialise le temps d'allocation Ta à un temps de latence TI. C'est à dire que les organes de commande 20 en charge au deuxième niveau de puissance P2 conservent et utilisent le jeton de charge J3 qu'ils ont pendant le temps de latence TI. Cette disposition permet de limiter au temps de latence TI le temps maximum d'attente avant une nouvelle répartition des jetons de charge J3. Ceci permet de démarrer plus rapidement la charge d'un nouveau véhicule 12. Le jeton de synchronisation J4 est détruit par l'organe de commande 20 qui l'a créé quand il le reçoit en retour, sachant qu'une fois créé le jeton de synchronisation J4 est transmis d'organe de commande en organe de commande. Le jeton de synchronisation J4 permet également de resynchroniser l'ensemble des organes de commande 20 sur le déclenchement de la temporisation de charge au niveau de puissance P2, qui correspond au temps d'allocation Ta. Ainsi, le temps moyen de possession d'un jeton de charge J3 est globalement le même pour chaque organe de commande 20.

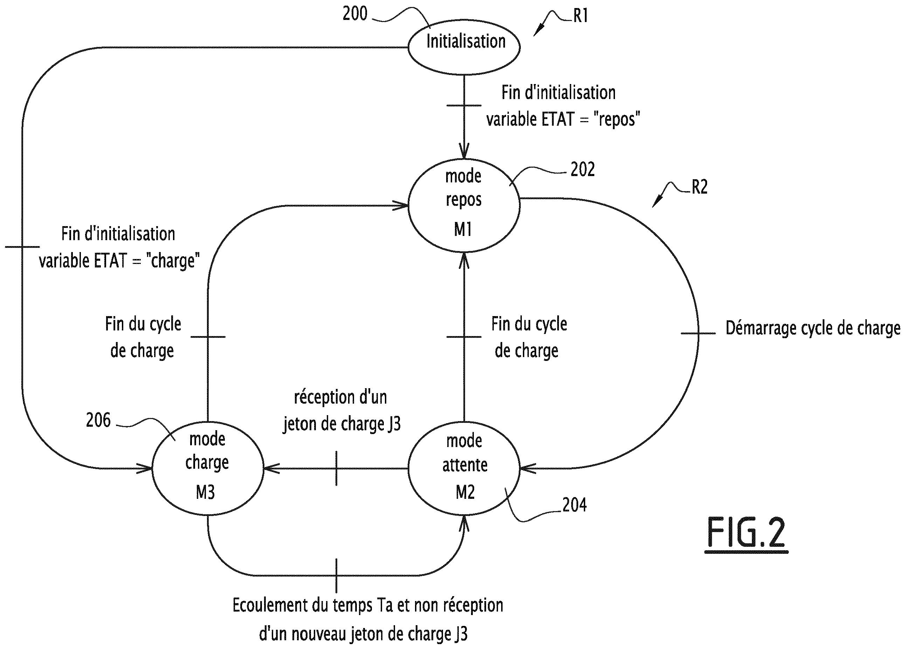

La figure 2 présente les différents régimes de fonctionnement R1, R2 des organes de commande 20. Au cours de ces régimes de fonctionnement chaque organe de commande 20 comprend une deuxième variable ETAT propre à avoir trois valeurs possibles qui sont les valeurs : « repos », « attente » et « charge ».

Lorsque la deuxième variable ETAT d'un des organes de commande 20 est à la valeur « repos » il n'y a pas de charge en cours réalisée par la borne de charge 18 correspondante. Lorsque la deuxième variable ETAT d'un des organes de commande 20 est à la valeur « attente », la borne de charge 18 correspondante délivre le premier niveau de puissance P1 et l'organe de commande 20 correspondant est en attente d'un jeton de charge J3. Lorsque la deuxième variable ETAT d'un des organes de commande 20 est à la valeur « charge », l'organe de commande 20 conserve et utilise un jeton de charge J3 et la borne de charge 18 correspondante délivre le deuxième niveau de puissance P2.

Lors de la mise en service du système de charge 10, chaque organe de commande 20 est successivement en régime d'initialisation R1. Chaque organe de commande 20 réalise successivement une étape 200 d'initialisation, l'organe de commande maître 20A réalisant en premier cette étape d'initialisation 200. Au cours et à la fin de l'étape d'initialisation 200, chaque organe de commande 20 à sa deuxième variable ETAT qui a soit la valeur « repos » soit la valeur « charge ». Puis, à la suite de l'étape d'initialisation 200, l'organe de commande 20 transmet un jeton de fin d'initialisation à l'organe de commande 20 suivant et entre dans son régime de fonctionnement nominal R2. Une fois que chaque organe de commande esclave 20B a réalisé l'étape 200, le dernier organe de commande esclave 20B à avoir réalisé cette étape 200 transmet à l'organe de commande maître 20A le jeton de fin d'initialisation qui le détruit et tous les organes de commande 20 sont dans leur régime nominal de fonctionnement R2.

Dans son régime nominal de fonctionnement R2, chaque organe de commande 20 connait suivant la valeur de la deuxième variable ETAT trois mode de fonctionnement : un fonctionnement en mode repos M1, correspondant à une étape 202, un fonctionnement en mode attente M2 correspondant à une étape 204 et un fonctionnement en mode charge M3 correspondant à une étape 206. Les étapes 202, 204 et 206 seront détaillées dans la suite et les conditions de passage d'une étape à une autre seront également décrites.

Le régime d'initialisation R1 a lieu à la mise sous tension du système de charge 10. Lors d'un fonctionnement en régime d'initialisation, le fonctionnement de l'organe de commande maître 20A est différent du fonctionnement de l'organe de commande esclave 20B.

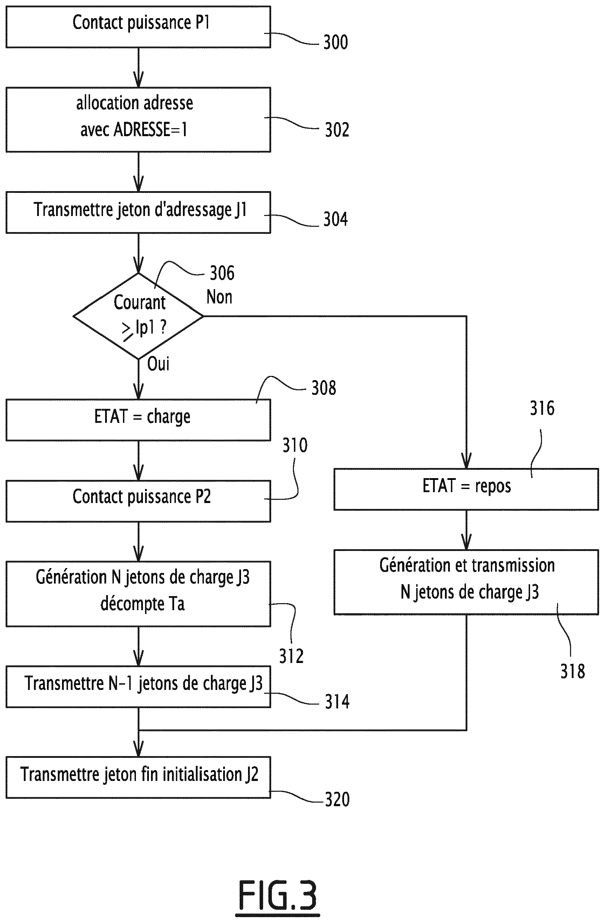

Le fonctionnement de l'organe de commande maître 20A en régime d'initialisation est représenté à la figure 3.

Lors d'une étape 300, le contact mobile 28 est positionné dans sa première position. Puis, au cours d'une étape 302, l'organe de commande maître 20A fixe son adresse à la valeur 1, et lors d'une étape 304 suivante, génère un jeton d'adressage dont la première variable ADRESSE est égale à 1 et le transmet à l'organe de commande esclave 20B suivant. Puis, lors d'une étape 306, l'organe de commande 20 teste si le capteur de courant 24 mesure un courant supérieur ou égal à un premier courant de charge lp1, c'est-à-dire si un véhicule 12 est connecté à la borne de charge 18 correspondante et en charge à un niveau de puissance supérieur ou égal au premier niveau de puissance P1.

Si un courant supérieur ou égal au premier courant de charge lp1 est mesuré, la deuxième variable ETAT de l'organe de commande maître 20A passe à la valeur « charge » au cours d'une étape 308 et le contact mobile 28 est déplacé vers sa deuxième position lors d'une étape 310. Au cours d'une étape suivante 312, l'organe de commande maître 20A génère N jetons de charge J3, en utilise un et lance le décompte du temps d'allocation Ta. Puis, lors d'une étape 314, l'organe de commande maître 20A transmet N-1 jetons de charge J3 à l'organe de commande esclave 20B suivant.

Si un courant très inférieur au premier courant de charge lp1, par exemple dix fois plus petit, est mesuré, l'organe de commande maître 20A a sa deuxième variable ETAT qui passe à la valeur« repos », lors d'une étape 316 et génère, puis transmet N jetons de charge J3 à l'organe de commande esclave 20B suivant lors d'une étape 318.

A la suite de l'étape 314 et de l'étape 318, l'organe de commande maître 20A génère et transmet à l'organe de commande esclave 20B suivant, lors d'une étape 320, le jeton de fin d'initialisation J2.

L'organe de commande maître 20A détruit le jeton de fin d'initialisation J2 quand il le reçoit en retour.

A la suite de l'étape 320, l'organe de commande maître 20A entre dans le régime de fonctionnement nominal R2, et la deuxième variable ETAT correspondante a soit la valeur « repos », soit la valeur « charge », l'organe de commande maître 20A effectue alors, comme présenté à la figure 2, respectivement l'étape 202 ou l'étape 206, c'est-à-dire que l'organe de commande maître 20A entre soit dans un fonctionnement en mode repos M1 également appelé mode repos M1, soit dans un fonctionnement en mode charge M3, également appelé mode charge M3.

A la mise sous tension du système de charge 10, chaque organe de commande esclave 20B fonctionne en régime d'initialisation R1. Ainsi, lors d'une première étape 400, le contact mobile 28 est déplacé vers sa première position. Puis lors d'une étape suivante 402 l'organe de commande esclave 20B correspondant attend le jeton d'adressage J1 transmis par l'organe de commande 20 précédent. Puis, au cours d'une étape 404, l'organe de commande esclave 20B incrémente la valeur de la première variable ADRESSE contenue dans le jeton d'adressage J1 d'une unité et fixe son adresse à cette nouvelle valeur. L'organe de commande 20B correspondant transmet ensuite lors d'une étape 406 le jeton d'adressage J1 à l'organe de commande 20 suivant. Ensuite, lors d'une étape 408, l'organe de commande esclave 20B donne à sa deuxième variable ETAT, la valeur « repos » et est en attente du prochain jeton lors d'une étape 410. Dans une étape 412, l'organe de commande esclave 20B teste si le prochain jeton reçu est un jeton de charge J3.

Si le jeton reçu est différent d'un jeton de charge J3, l'organe de commande esclave 20B transmet le jeton de fin d'initialisation J2 à l'organe de commande 20 suivant lors d'une étape 414 et l'organe de commande 20 sort du régime d'initialisation R1.

Si le jeton reçu est un jeton de charge J3, dans une étape 416, l'organe de commande esclave 20B détermine si la deuxième variable ETAT de l'organe de commande esclave 20B a la valeur « repos » et, au cours d'une étape 418 suivante, l'organe de commande esclave 20B teste si le capteur de courant 24 mesure un courant supérieur ou égal au premier courant de charge lp1.

Si la deuxième variable ETAT de l'organe de commande esclave 20B correspondant n'est pas égale à « repos », le jeton de charge J3 est transmis à l'organe de commande 20 suivant lors d'une étape 420 et l'organe de commande esclave 20B revient à l'étape 410 en attente du prochain jeton.

Si la deuxième variable ETAT de l'organe de commande esclave 20B correspondant a la valeur « repos » il passe à l'étape 418.

A la suite de l'étape 418, si un courant très inférieur au premier courant de charge lp1, par exemple dix fois plus petit, est mesuré par le capteur de courant 24 correspondant, l'organe de commande esclave 20B passe à l'étape 420 de transmission du jeton de charge J3 reçu, puis il revient à l'étape 410 suite à la transmission du jeton de charge J3.

A la suite de l'étape 418, si un courant supérieur ou égal au premier courant de charge lp1 est mesuré par le capteur de courant 24 correspondant, l'organe de commande esclave 20B a sa deuxième variable ETAT qui passe à la valeur « charge » lors d'une étape 422 et le contact mobile 28 est lors d'une étape 424 déplacé vers sa deuxième position. Enfin, lors d'une étape 426, l'organe de commande esclave 20B lance le décompte du temps d'allocation Ta et il revient à l'étape 410 d'attente du prochain jeton.

Après que l'organe de commande 20B correspondant a transmis son jeton de fin d'initialisation J4 lors de l'étape 414, il passe alors en régime nominal R2, et la deuxième variable ETAT correspondante a soit la valeur « repos », soit la valeur « charge », l'organe de commande esclave 20B effectue alors, comme présenté à la figure 2, respectivement l'étape 202 ou l'étape 206, c'est-à-dire que l'organe de commande esclave 20B entre soit en mode repos M1 soit en mode charge M3.

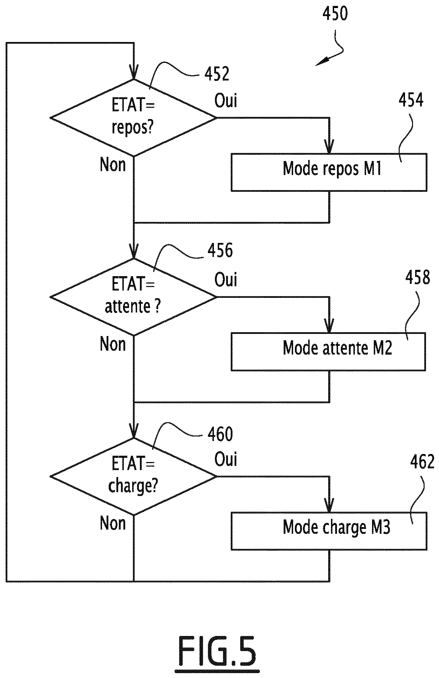

Lors d'un fonctionnement en régime nominal R2 chaque organe de commande 20 met en oeuvre un algorithme 450 représenté à la figure 5 et correspondant à l'application du procédé de répartition de la puissance électrique. Cet algorithme 450 correspond à une boucle infinie au cours de laquelle l'organe de commande 20 effectue une première étape 452 où l'organe de commande 20 teste si la deuxième variable ETAT correspondante a la valeur « repos ».

Si la deuxième variable ETAT de l'organe de commande 20 à la valeur « repos », l'organe de commande 20 réalise une étape 454, similaire à l'étape 202, de fonctionnement en mode repos, et l'organe de commande 20 détermine lors d'une étape 456 si la deuxième variable ETAT à la valeur « attente ».

Si la deuxième variable ETAT de l'organe de commande 20 a une valeur différente de « repos », l'organe de commande 20 réalise directement l'étape 456.

Suite à l'étape 456, si la deuxième variable ETAT a la valeur «attente», l'organe de commande 20 réalise une étape 458, similaire à l'étape 204, de fonctionnement en mode attente, et il teste au cours d'une étape 460 si la deuxième variable ETAT a la valeur « charge ».

Suite à l'étape 456, si la deuxième variable ETAT a une valeur différente de « attente », l'organe de commande 20 réalise directement l'étape 460.

Suite à l'étape 460, si la deuxième variable ETAT est égale à la valeur «charge », l'organe de commande 20 réalise une étape 462, similaire à l'étape 206, de fonctionnement en mode charge et il revient à l'étape 452.

Suite à l'étape 460 si la deuxième variable ETAT a une valeur différente de la valeur « charge », l'organe de commande 20 revient à l'étape 452.

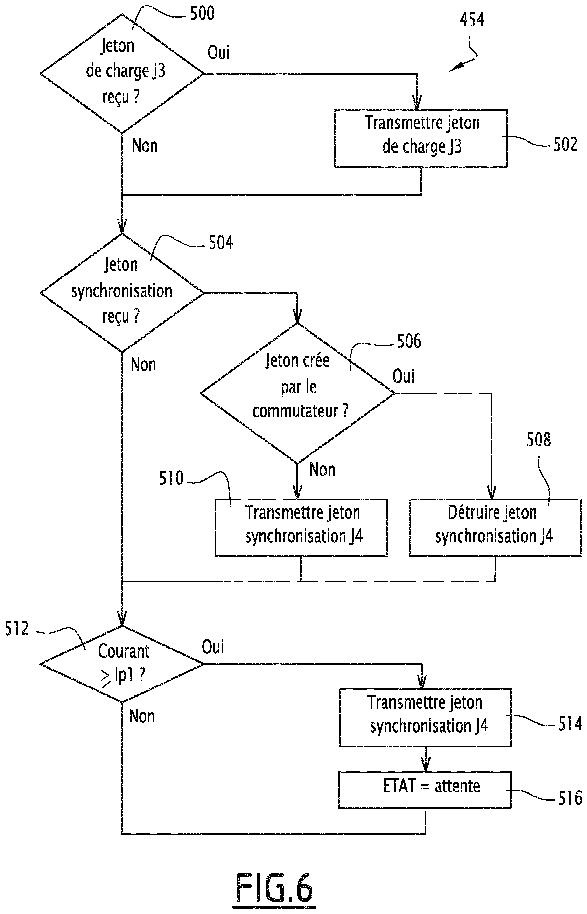

L'algorithme mis en oeuvre en mode repos qui correspond à l'étape 454 et à l'étape 202 est représenté à la figure 6. Lors d'un fonctionnement en mode repos l'organe de commande réalise une première étape 500 au cours de laquelle il teste s'il a reçu un jeton de charge J3 ou non.

Si l'organe de commande 20 a reçu un jeton de charge J3, il le transmet à l'organe de commande suivant au cours d'une étape 502, et réalise une étape 504 au cours de laquelle il détermine si un jeton de synchronisation J4 a été reçu.

Si l'organe de commande 20 a reçu un jeton autre que le jeton de charge J3, il passe directement à l'étape 504.

Suite à l'étape 504, si le jeton reçu est un jeton de synchronisation J4, alors l'organe de commande 20 teste lors d'une étape 506 s'il a créé le jeton de synchronisation J4 reçu et si c'est le cas, il le détruit lors d'une étape 508 et, dans le cas contraire, le transmet à l'organe de commande 20 suivant lors d'une étape 510. Suite aux étapes 508 et 510, l'organe de commande effectue une étape 512, où il détermine si le capteur de courant 24 mesure un courant supérieur ou égal au premier courant de charge lp1.

Suite à l'étape 504, si le jeton reçu est un jeton autre qu'un jeton de synchronisation J4 alors l'organe de commande 20 effectue directement l'étape 512.

Si un courant très inférieur au premier courant de charge lp1, par exemple dix fois plus petit, est mesuré par le capteur de courant 24, alors l'organe de commande 20 sort du fonctionnement en mode repos et passe à l'étape 456 visible à la figure 5.

Si un courant supérieur ou égal au premier courant de charge lp1 est mesuré par le capteur de courant 24 alors, au cours d'une étape 514, l'organe de commande 20 génère un jeton de synchronisation J4 et le transmet à l'organe de commande 20 suivant. Ceci correspond au moment où un véhicule est connecté à la borne 18 correspondante et a démarré un cycle de charge, c'est-à-dire qu'un véhicule supplémentaire est connecté au système de charge 10. Puis, lors d'une étape 516 suivante, la deuxième variable ETAT prend la valeur « attente », l'organe de commande 20 passe donc dans un fonctionnement en mode attente M2. L'organe de commande 20 sort alors du mode repos et passe à l'étape 456 visible à la figure 5.

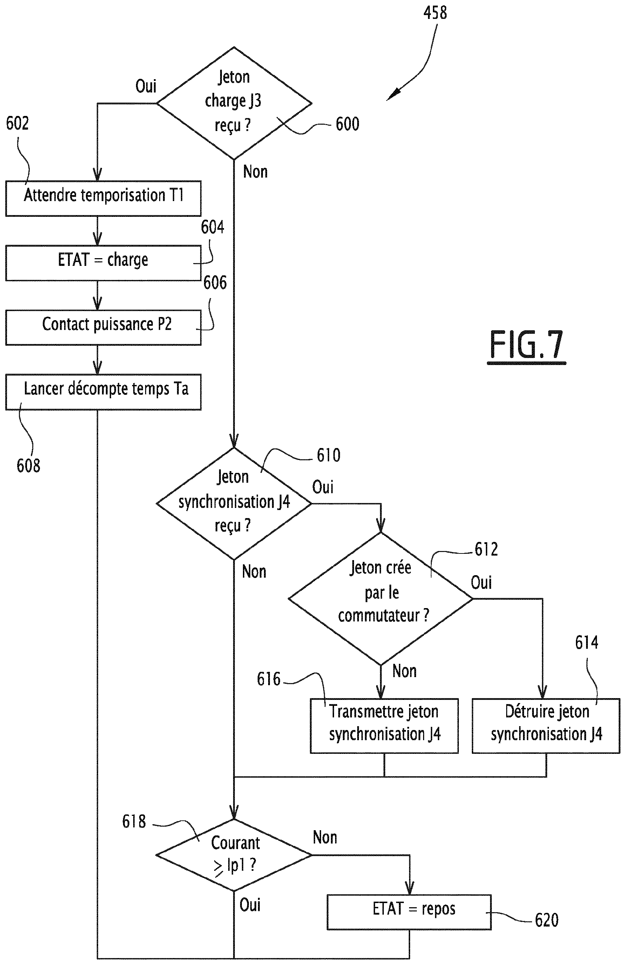

L'algorithme mis en oeuvre en mode attente qui correspond à l'étape 458 et à l'étape 204 est représenté à la figure 7. Dans le cas d'un fonctionnement en mode attente, l'organe de commande 20, lors d'une étape 600, teste s'il a reçu un jeton de charge J3.

S'il a reçu un jeton de charge J3, l'organe de commande 20 ne fait rien pendant un premier temps d'attente T1, au cours d'une étape 602. Ceci permet à une borne de charge 18, correspondant à l'organe de commande 20 précédent qui a transmis le jeton de charge J3 reçu, sans en avoir reçu lui-même un autre jeton, de passer d'une charge au deuxième niveau de puissance P2 à une charge au premier niveau de puissance P1. Grâce au premier temps d'attente T1, tout dépassement momentané de la première puissance maximale P1 max autorisée est évité. Puis, lors d'une étape 604, la deuxième variable ETAT correspondante, prend la valeur « charge » et, lors d'une étape 606, le contact mobile 28 est déplacé vers sa deuxième positon, afin que la borne 18 correspondante délivre le deuxième niveau de puissance P2. Ensuite, le décompte du temps d'allocation Ta est déclenché lors d'une étape 608, et l'organe de commande sort de son fonctionnement en mode attente. L'organe de commande 20 passe à l'étape 460 visible à la figure 5.

Dans le cas où le jeton reçu est différent d'un jeton de charge J3, l'organe de commande 20 détermine lors d'une étape 610 s'il s'agit d'un jeton de synchronisation J4.

Si le jeton reçu est un jeton de synchronisation J4, alors l'organe de commande 20 effectue des étapes 612, 614, 616 respectivement identiques aux étapes 506, 508 et 510 décrites précédemment. Suite aux étapes 614 et 616, l'organe de commande 20 teste, au cours d'une étape 618, si le capteur de courant 24 mesure un courant supérieur ou égal au premier courant de charge lp1.

Suite à l'étape 610, si le jeton reçu est différent d'un jeton de synchronisation J4, l'organe de commande 20 passe directement à l'étape 618.

Si le courant mesuré est supérieur ou égal au premier courant de charge lp1, l'organe de commande 20 sort du fonctionnement en mode attente et passe à l'étape 460 visible à la figure 5.

Si le courant mesuré est très inférieur au courant de charge lp1, par exemple dix fois plus petit, alors la deuxième variable ETAT de l'organe de commande 20 correspondant prend la valeur « repos » au cours d'une étape 620 et sort du fonctionnement en mode attente. L'organe de commande passe à l'étape 460 visible à la figure 5.

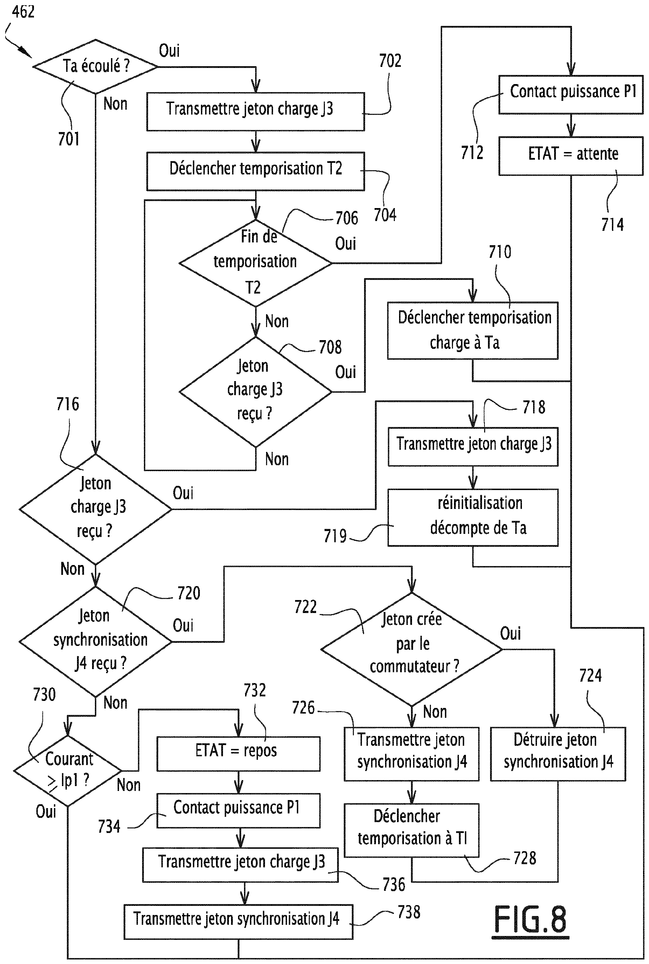

L'algorithme mis en oeuvre en mode charge, qui correspond à l'étape 462 et à l'étape 206, est représenté à la figure 8. Lors d'un fonctionnement en mode charge, la variable ETAT de l'organe de commande 20 correspondant a la valeur « charge » et l'organe de commande 20 réalise un algorithme de fonctionnement en charge. Lors d'une première étape 700, l'organe de commande teste si le temps d'allocation Ta est écoulé.

Si le temps d'allocation Ta est écoulé alors, au cours d'une étape 702, l'organe de commande 20 correspondant transmet le jeton de charge J3 qu'il utilise, à l'organe de commande 20 suivant et déclenche, lors d'une étape 704, une temporisation, c'est-à-dire le décompte d'un deuxième temps d'attente T2, par exemple de l'ordre de la seconde. Puis, lors d'une étape 706, l'organe de commande 20 teste si le deuxième temps d'attente T2 est écoulé.

Tant que le deuxième temps d'attente T2 n'est pas écoulé à l'étape 706, l'organe de commande 20 teste lors d'une étape 708 s'il a reçu un jeton de charge J3.

Si un jeton de charge J3 est reçu, alors, au cours d'une étape 710, l'organe de commande 20 déclenche le décompte du temps d'allocation Ta et la borne 18 correspondante continue à délivrer le deuxième niveau de puissance P2.

Si aucun jeton de charge J3 n'est reçu et que le deuxième temps d'attente T2 est écoulé, alors lors d'une étape 712, le contact mobile 28 est déplacé vers sa première position et lors d'une étape 714 la deuxième variable ETAT correspondante prend la valeur « attente ». Suite à l'étape 714 l'organe de commande 20 sort du fonctionnement en mode charge M3 et il passe à l'étape 452 visible à la figure 5. Le deuxième temps d'attente T2 permet d'éviter des passages brefs de la puissance délivrée par la borne 18 entre le deuxième niveau de puissance P2 et le premier niveau de puissance P1.

Si lors de l'étape 700, l'organe de commande 20 détecte que le temps d'allocation Ta n'est pas encore écoulé, alors il réalise une étape 716 au cours de laquelle l'organe de commande teste si il a reçu un jeton de charge J3.

Si un jeton de charge J3 est reçu, alors l'organe de commande 20 le transmet à l'organe de commande 20 suivant lors d'une étape 718. En effet, l'organe de commande 20 est propre à utiliser et à ne conserver qu'un seul jeton de charge J3 à la fois. Puis, étant donné que l'organe de commande 20 a détecté qu'un jeton de charge circule sur les liaisons de communication 30, il réinitialise à zéro le décompte du temps d'allocation Ta lors d'une étape 719. Ainsi, le véhicule 12 connecté à la borne correspondante sera rechargé avec le deuxième niveau de puissance P2 pendant un temps plus important que si le décompte n'avait pas été réinitialisé. Suite à l'étape 719 l'organe de commande 20 sort du fonctionnement en mode charge M3 et il passe à l'étape 452 visible à la figure 5.

Si aucun jeton de charge n'est reçu, alors l'organe de commande 20 détermine s'il a reçu un jeton de synchronisation J4 lors d'une étape 720.

Si un jeton de synchronisation est reçu, alors l'organe de commande effectue des étapes 722, 724, 726 respectivement identiques aux étapes 612, 614, 616. Suite à l'étape 726, l'organe de commande 20 réalise une étape 728 au cours de laquelle il modifie la valeur du temps d'allocation Ta et le fixe au temps de latence TI, par exemple égale à Ta/2. Puis, il déclenche le décompte du temps de latence TI. Ceci permet, lorsque le temps de latence TI est très petit devant le temps d'allocation Ta, d'accélérer la recirculation des jetons de charge J3 en cas de modification, à la hausse ou à la baisse, du nombre de véhicules 12 simultanément connectés et en charge.

Suite aux étapes 720 ou 728 ou 724, suivant le cas dans lequel l'organe de commande 20 se trouve, il réalise une étape 730 au cours de laquelle il détermine si le courant mesuré par le capteur de courant 24 est supérieur ou égal au courant de charge lp1.

Si le courant mesuré est très inférieur au courant de charge lp1, par exemple dix fois plus petit, alors l'organe de commande 20 sort du fonctionnement en mode charge et il passe à l'étape 452 visible à la figure 5.

Si le courant mesuré est supérieur ou égal au courant de charge lp1, alors l'organe de commande 20 réalise une étape 732, où la deuxième variable ETAT prend la valeur « repos », puisqu'aucun véhicule 12 n'est connecté à la borne 18 correspondante ou puisque le véhicule 12 connecté est complètement chargé. Puis, le contact mobile 28 est déplacé vers sa première position lors d'une étape 734, et le jeton de charge J3 qui était utilisé est transmis à l'organe de commande 20 suivant lors d'une étape 736. L'organe de commande 20 génère alors et transmet au cours d'une étape 738 un jeton de synchronisation J4 afin de signaler qu'un jeton de charge J3 est disponible, c'est-à-dire qu'une tranche de puissance égale à la puissance partielle P' est disponible, et de resynchroniser la circulation des jetons de charge J3. Suite à l'étape 738, l'organe de commande 20 sort du fonctionnement en mode charge et il passe à l'étape 452 visible à la figure 5.

Ainsi, grâce à l'algorithme 450 correspondant au procédé de répartition de la puissance, les organes de commande 20 communiquent entre eux via les liaisons de communication 30 et commandent la répartition de la première puissance maximale P1 max en fonction du temps et du nombre de véhicules électriques 12 connectés aux bornes de charge 18 et en charge. Le temps d'allocation Ta et la réitération de l'algorithme 450 permettent de commander la répartition de la puissance maximale P1 max en fonction du temps. En effet, si un organe de commande est en mode charge et que le temps d'allocation Ta est écoulé, la deuxième variable ETAT correspondante prend la valeur « attente », ce qui garantit le déplacement des jetons de charge J3 au cours du temps et l'adaptabilité du système 10.

Au cours du procédé de répartition de la charge, lors de la connexion d'un véhicule électrique 12 à une borne de charge 18, celui-ci est au moins chargé avec le premier niveau de puissance P1, ce qui permet le démarrage d'un nouveau cycle de charge sans condition et la détection de cet événement par l'organe de commande 20 par simple mesure du courant par le capteur 24, puisque le contact mobile 28 n'a que deux positions, correspondant soit à une charge au premier niveau de puissance P1, soit à une charge au deuxième niveau de puissance P2.

De plus, les jetons de charge J3 circulant régulièrement entre les organes de commande 20, le système de charge 10 s'adapte à la connexion d'un véhicule 12 supplémentaire ou à la déconnexion d'un véhicule 12. En effet, chaque organe de commande 20 est propre à passer en mode repos à la fin d'un cycle de charge lorsqu'il est en mode attente ou en mode charge, comme présenté à la figure 2. En outre, chaque organe de commande 20 est propre à démarrer un cycle de charge et à passer en mode attente lors de la connexion d'un véhicule.

Comme présenté à la figure 6 avec les étapes 500 et 502, chaque organe de commande 20 est propre à utiliser et à conserver le jeton de charge J3 qu'il reçoit lorsque la borne de charge 18 correspondante est connectée à un véhicule électrique 12 qui requiert une charge électrique. En effet, dans le cas où l'organe de commande 20 correspondant est en mode repos, il effectue à la réception d'un jeton de charge J3 les étapes 500 et 502, c'est-à-dire qu'il transmet le jeton de charge J3 reçu à l'organe de commande suivant, il n'est donc pas propre à l'utiliser.

De plus, il apparait à la figure 8, qui correspond à un mode de fonctionnement en charge, que lorsqu'un organe de commande 20 est en mode charge, s'il reçoit un jeton de charge J3 alors qu'il est déjà en train d'utiliser un jeton de charge J3 et de délivrer le deuxième niveau de puissance P2, il transmet à l'organe de commande suivant le jeton de charge J3 reçu, comme présenté à l'étape 718. Ainsi, lorsqu'un organe de commande utilise un jeton de charge J3 et que sa borne de charge 18 correspondante délivre le deuxième niveau de puissance P2, il n'est pas apte à utiliser le jeton de charge J3 reçu et à délivrer la puissance partielle P' supplémentaire correspondante.

Il apparait donc, que chaque jeton de charge J3 généré par l'organe de commande maître 20B à l'initialisation en régime R1, est transmis d'un organe de commande 20 vers l'organe de commande 20 suivant, jusqu'à ce qu'un organe de commande 20 soit propre à l'utiliser, le conserve et alloue ainsi la puissance partielle P' supplémentaire correspondante à la borne de charge 18 correspondante pendant le temps d'allocation Ta. Puis, après l'écoulement du temps d'allocation Ta, le jeton de charge J3 est transmis à l'organe de commande 20 suivant, comme présenté à l'étape 702.

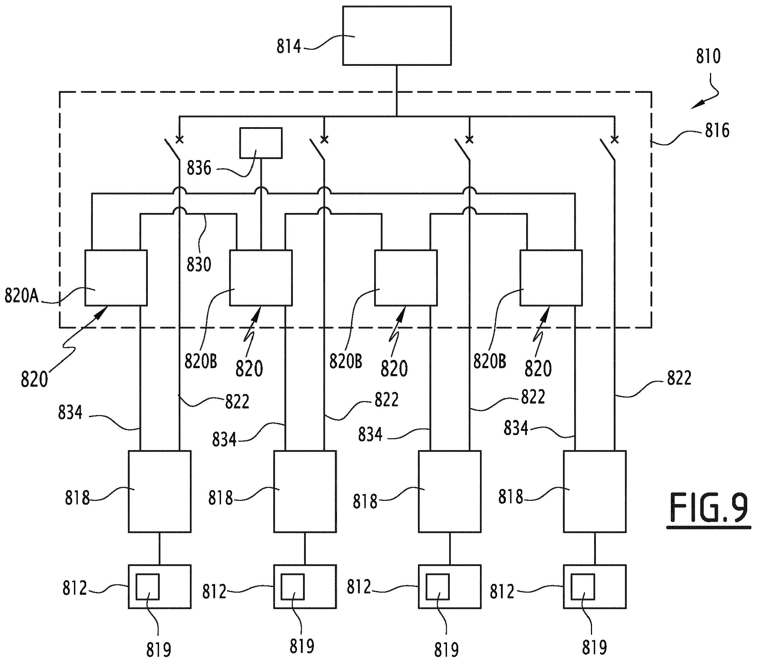

La figure 9 illustre un système de charge 810 conforme à un deuxième mode de réalisation de l'invention, dont les éléments semblables à ceux du premier mode de réalisation présentent les références numériques du premier mode de réalisation augmentées de 800.

Ainsi, chaque système de charge 810 est propre à charger électriquement une pluralité de véhicules électriques 812 et comprend une alimentation électrique 814 un tableau électrique 816, quatre bornes de charge 818. Chaque véhicule électrique 812 comprend une batterie 819 et à chaque borne de charge 818 est associé un organe de commande 820. Une première ligne électrique 822 relie chaque borne de charge 818 à l'alimentation électrique 814. Les organes de commande 820 sont reliés par des liaisons de communication 830 et forment une boucle de communication fermée.

Le tableau électrique 816 comprend un compteur électrique 836 propre à transmettre, par exemple, des informations tarifaires ou une consigne fournie par un distributeur d'énergie.

L'organe de commande 820A qui fonctionne en maître est relié au compteur électrique 836.

Chaque organe de commande 820 est propre à transmettre le signal S1 de commande à la borne de charge 818 correspondante. Le signal de commande S1 étant propre à commander le niveau de puissance délivré par la borne de charge 818 à un véhicule 812 connecté à celle-ci.

Dans le système de charge 810, selon le deuxième mode de réalisation, pour chaque organe de commande 820, le contact mobile 28 et la deuxième ligne électrique 26 du premier mode de réalisation sont remplacés par une liaison de communication bidirectionnelle 834. Ainsi, le signal de commande S1 et l'organe de commande 820 correspondant sont propres à commander la borne de charge 818 correspondante de manière à ce qu'elle délivre une pluralité de niveaux de puissance.

En outre, des jetons J1, J2, J3, J4 identiques à ceux décrits pour le premier mode de réalisation et portant les mêmes références sont propres à circuler entre les organes de commande 820 sur les liaisons de communication 830.

La liaison bidirectionnelle 834 permet à chaque borne de charge 818 d'indiquer à l'organe de commande 820 correspondant qu'un véhicule électrique 812 lui est raccordé et requiert une charge. Ainsi, l'organe de commande 820 correspondant est propre à transmettre le signal S1 de commande à la borne de charge correspondante 818 et à commander un certain niveau de puissance de charge. Il n'y a pas une réserve de puissance correspondant au premier niveau de puissance P1 qui est systématiquement allouée à une borne non connectée à un véhicule 12. En effet, dans ce mode de réalisation, lorsque une borne de charge 818 n'est pas utilisée, l'organe de commande 820 ne lui alloue pas le niveau de puissance P1, puisque dès la connexion d'un véhicule électrique 812 à cette borne 818 l'organe de commande est propre à détecter cette connexion alors que dans le premier mode de réalisation le capteur de courant 24 permettait de détecter cette connexion. Or pour détecter la connexion d'un véhicule électrique 12 avec le capteur de courant 24, dans le premier mode de réalisation, il est nécessaire d'allouer à tout moment le premier niveau de puissance P1 à la borne de charge 18 correspondante.

Grâce à la liaison bidirectionnelle 834, l'organe de commande 820 connait en permanence une puissance consommée Pc par la borne 818 correspondante, et est alors apte à en déduire la puissance réellement absorbée par le véhicule électrique 812 en charge. Dans le cas où la puissance consommée Pc est inférieure à la puissance allouée par le commutateur 820 correspondant, l'organe de commande 820 est propre à mettre un écart entre la puissance allouée et la puissance consommée Pc à la disposition des autres bornes 818. Pour cela, l'organe de commande 820 correspondant crée des jetons de charge J3 similaires aux jetons de charge J3 présentés pour le premier mode de réalisation, qu'il transmet sur les liaisons de communication 830 entre les organes de commande 820. Ces jetons de charge J3 créés sont détruits par l'organe de commande 820 correspondant qui les a crées, dans le cas où la puissance consommée Pc n'est plus inférieure à la puissance allouée.

Grâce au compteur électrique 836, l'organe de commande maître 820A reçoit les informations tarifaires et connait la puissance totale consommée par le système de charge 810. En fonction de ces informations, l'organe de commande maître 820A est propre à tout moment à créer ou supprimer des jetons de charge J3 en circulation. Il est ainsi possible d'ajuster la première puissance maximale P1 max délivrée en fonction de la période tarifaire, ou d'une consigne fournie par le distributeur d'énergie, et ainsi de changer la répartition de la première puissance maximale P1 max entre les bornes de charges 818 et les organes de commande correspondants 820.

Chaque jeton de charge J3 correspond, comme dans le premier mode de réalisation, à une puissance partielle autorisée P'. Cependant, dans ce deuxième mode de réalisation, la puissance partielle P' ne dépend pas forcément, à la différence du premier mode de réalisation, du premier niveau de puissance P1. En effet il n'y a pas une réserve de puissance correspondant au premier niveau de puissance P1 qui est systématiquement allouée à chaque borne de charge 18. Pour chaque jeton de charge J3 créé la puissance partielle P' associé est toujours la même.

Dans le premier mode de réalisation, chaque organe de commande 20 est propre à conserver et à utiliser un seul jeton de charge J3 à la fois, qu'il conserve pendant le temps d'allocation Ta. Selon ce deuxième mode de réalisation, chaque organe de commande 820 est propre à conserver simultanément plusieurs jetons de charge J3 ce qui permet d'augmenter la puissance instantanée que la borne de charge 818 associée est autorisée à délivrer. Un organe de commande 820 est donc apte à conserver un nombre maximal de jetons de charge pour lequel la somme des puissances partielles P' correspondantes correspond à une deuxième puissance maximale P2max, et lorsqu'il reçoit un nombre de jeton de charge supérieur à ce nombre maximal, l'organe de commande 820 est propre à les retransmettre. La deuxième puissance maximale P2max correspond à une puissance maximale qu'une borne de charge 818 est propre à délivrer. Il est ainsi possible d'allouer plusieurs tranches de puissance, c'est-à-dire plusieurs fois le niveau de puissance P' à une même borne 818. Le fait de pouvoir allouer plusieurs fois le niveau de puissance partielle P' à une même borne 818 permet de piloter avec précision la répartition de la première puissance maximale P1 max, principalement lorsque le niveau de puissance partielle P' est de faible valeur comparativement à la première puissance maximale, par exemple cent fois plus petit, et que le nombre de jetons de charge J3 est alors élevé.

En variante, le temps d'allocation Ta varie suivant l'organe de commande 820. Ainsi, l'organe de commande 820 est propre à conserver les jetons de charge J3 pendant un temps plus ou moins important en fonction du temps d'allocation Ta associé audit organe de commande 820. Cela permet de gérer les priorités de charge entre différentes bornes de charge 818. Par exemple, pour une borne de charge 818 disposant d'une priorité élevée, l'organe de commande 820 correspondant consomme un jeton de charge J3 au démarrage de la charge et ne le libère qu'en fin de charge. Selon cette variante, la priorité est paramétrée simplement au niveau de la borne de charge 818 ou au niveau de l'organe de commande 820, à l'aide par exemple d'une roue codeuse, non représentée.

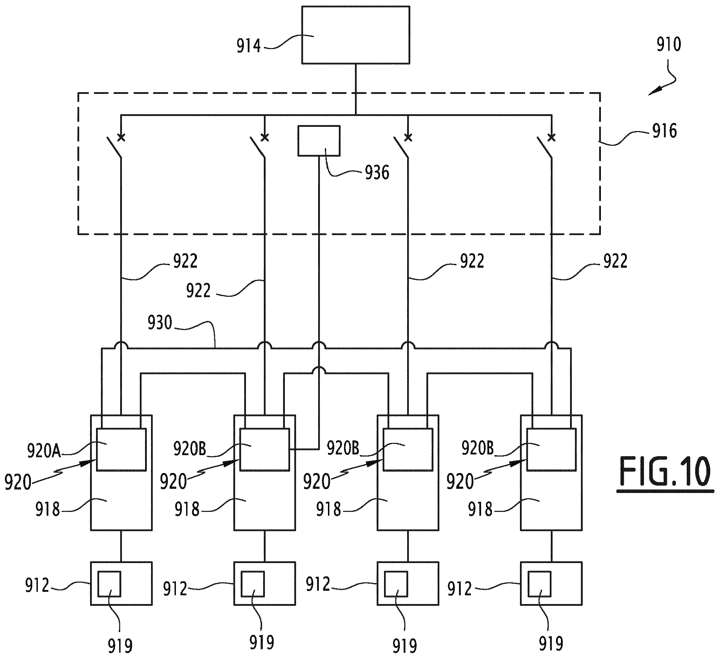

La figure 10 illustre un système de charge 910 conforme à un troisième mode de réalisation de l'invention, dont les éléments semblables à ceux du deuxième mode de réalisation présentent les références numériques du deuxième mode de réalisation augmentées de 100.

Selon ce troisième mode de réalisation, le système de charge 910 est identique au système de charge 810 à la seul différence que chaque organe de commande 920 est compris dans la borne de charge 918 correspondante. Ainsi, les organes de commande 920 sont intégrés aux bornes de charges 918, et la liaison bidirectionnelle 834 du deuxième mode de réalisation est supprimée.

Le fonctionnement du système de charge 910 est similaire au fonctionnement du système de charge 810 et la communication bidirectionnelle entre chaque organe de commande 920 et la borne de charge 918 correspondante est maintenue.

Pour les systèmes de charge 810 et 910 le fonctionnement est analogue à ce qui a été présenté pour le premier mode de réalisation, les algorithmes présentant toutefois les différences suivantes : le nombre de jetons de charge J3 échangés entre ou consommés par les organes de commandes 820, 920, varie dans le temps et est égal à la première puissance maximale P1 max délivrée par l'alimentation électrique 814, 914,divisée par la puissance partielle P'. Un organe de commande 820, 920 peut consommer simultanément autant de jetons de charge J3 que de tranches de puissance partielle P' comprises dans la deuxième puissance maximale P2max que la borne 818, 918 correspondante est propre à délivrer. L'organe de commande maître 820A, 920A crée les nouveaux jetons de charge J3 quand la première puissance maximale P1 max augmente et met en circulation les jetons de charge J3 entre les organes de commande 820, 920.

De plus, un jeton de destruction J5 est utilisé pour détruire un jeton de charge J3. Quand la première puissance maximale P1 max diminue l'organe de commande maître 820A, 920A, crée autant de jetons de destruction J5 que de jetons J3 à détruire et les met en circulation entre les organes de commande 820, 920. Un organe de commande 820, 920, qui reçoit un jeton de destruction J5 et qui est en train de consommer au moins un jeton de charge J3 demande à la borne 818, 918 correspondante de diminuer la puissance délivrée à son véhicule 812, 912 d'une tranche de puissance partielle P', puis détruit le jeton de charge J3 consommé ainsi que le jeton J5. Un organe de commande 820, 920 qui reçoit un jeton de destruction J5 alors qu'il ne consomme aucun jeton de charge J3 transmet le jeton J5 à l'organe de commande 820, 920, suivant. L'organe de commande maître 820A, 920A détruit le jeton de destruction J5 lorsqu'il le reçoit ainsi que le prochain jeton de charge J3 qu'il recevra.

Les deuxième et troisième modes de réalisation amènent des informations supplémentaires et permettent, comme expliqué précédemment, d'avoir un système de charge 810, 910 plus complexe, propre à gérer des priorités de charge et à adapter la première puissance maximale P1 max et le niveau de puissance délivré en fonction des informations tarifaires reçues via le compteur électrique 836, 936.

Les systèmes de charge 10, 810, 910 permettent ainsi de charger simultanément plusieurs véhicules 12, 812, 912 en maximisant en permanence la puissance moyenne de charge des véhicules électriques en fonction du nombre de véhicules électriques 12 connectés au système 10, 810, 910.

De plus, dans les systèmes de charge 10, 810, 910, le cycle de charge des batteries 19, 819, 919 n'est jamais interrompu, puisque chaque batterie est chargée au moins avec le premier niveau de puissance P1.

Les systèmes de charge 10, 810, 910 représentés aux figures 1, 9 et 10 comprennent des organes de commande 20, 820, 920 qui forment une boucle de communication fermée.

En variante, les organes de commande 20, 820, 920 communiquent via des liaisons sans fil et/ou un réseau Ethernet, non représentés. Plus généralement, tous les types de réseau sont envisageables afin d'établir une communication entre les organes de commande 20, 820, 820.

## Revendications

1. Système de charge électrique (10; 810 ; 910) d'une pluralité de véhicules électriques (12 ; 812 ; 912), lequel système comprend :
- une alimentation électrique (14 ; 814 ; 914) propre à délivrer une puissance électrique maximale (P1 max),
- une pluralité de bornes de charge (18 ; 818 ; 918), chacune étant propre à être connectée à un véhicule électrique (12 ; 812 ; 912) et à recharger une batterie (19; 819 ; 919) dudit véhicule électrique, ainsi qu'à délivrer plusieurs niveaux de puissance électrique (P1, P2), chaque borne de charge (18 ; 818 ; 918) étant connectée, via une ligne électrique (22 ; 822 ; 922) correspondante, à l'alimentation électrique (14; 814 ; 914),
- pour chaque borne de charge (18 ; 818 ; 918), un organe (20 ; 820 ; 920) de commande du niveau de puissance électrique (P1, P2) délivré par la borne de charge (18 ; 818 ; 918) au véhicule électrique (12 ; 812 ; 912) connecté à celle-ci, l'organe de commande (20 ; 820 ; 920) étant propre à transmettre un signal de commande (S1) à la borne de charge (18 ; 818 ; 918) correspondante, ledit niveau de puissance électrique (P1, P2) délivré étant fonction dudit signal de commande (S1),
dans lequel les organes de commande (20 ; 820, 920) sont reliés les uns aux autres par des liaisons de communication (30 ; 830 ; 930), en ce qu'au moins l'un des organes de commande génère des jetons de charge (J3) propres à circuler entre les organes de commande (20 ; 820 ; 920) sur les liaisons de communication (30 ; 830 ; 930), à chaque jeton de charge (J3) étant associée une puissance partielle (P'), correspondant à une subdivision de la puissance maximale (P1 max) et la somme des puissances partielles (P') associées aux jetons de charge (J3) étant inférieure ou égale à la puissance maximale (P1 max), en ce que les organes de commande sont propres à commander à l'aide des jetons de charge (J3) la répartition de la puissance maximale (P1 max) entre les bornes de charge en fonction du temps et du nombre de véhicules électriques (12 ; 812 ; 912) connectés aux bornes de charge (18 ; 818 ; 918) et requérant une charge,
dans lequel chaque organe de commande (20 ; 820 ; 920) est relié, via les liaisons de communication (30 ; 830 ; 930), à deux organes de commande (20 ; 820 ; 920), l'ensemble des organes de commande (20 ; 820 ; 920) formant une liaison chainée, correspondant à une boucle de communication fermée,
dans lequel les jetons de charge (J3) sont adaptés pour circuler dans un sens unique entre les organes de commande (20 ; 820 ; 920) via les liaisons de communication (30 ; 830 ; 930),
**caractérisé en ce qu'**à chaque jeton de charge (J3) est associé un temps d'allocation (Ta), correspondant au temps pendant lequel chaque organe de commande (20 ; 820 ; 920) est propre à utiliser et à conserver le jeton de charge lorsqu'il le reçoit (J3),
**en ce que** chaque organe de commande (20 ; 820 ; 920) est propre à détecter le démarrage de la charge d'une batterie d'un véhicule électrique (12) connecté à la borne de charge (18) correspondante ou la fin de la charge de la batterie dudit véhicule électrique (12), et suite à la détection du démarrage ou de la fin de la charge, l'organe de commande correspondant est propre à transmettre un jeton de synchronisation (J4) aux autres organes de commande (20 ; 820 ; 920), le jeton de synchronisation (J4) circulant dans un sens unique entre les organes de commande (20 ; 820 ; 920),
et **en ce que** les organes de commande (20 ; 820 ; 920) qui détiennent un jeton de charge (J3) lors de la réception du jeton de synchronisation (J4) sont propres à réinitialiser le temps d'allocation (Ta) à un temps de latence (TI) et à conserver encore le jeton de charge (J3) pendant le temps de latence (TI), le jeton de synchronisation (J4) étant transmis d'organe de commande (20 ; 820 ; 920) en organe de commande.

2. Système selon la revendication 1, **caractérisé en ce que** chaque organe de commande (20 ; 820 ; 920) est relié, via les liaisons de communication (30 ; 830 ; 930), à deux organes de commande (20 ; 820 ; 920), l'ensemble des organes de commande (20 ; 820 ; 920) formant une liaison chainée, correspondant à une boucle de communication fermée.

3. Système selon l'une des revendications précédentes, **caractérisé en ce que** la communication entre les organes de commande (20 ; 820 ; 920) est une communication de type point à point, **en ce que** les organes de commande (20 ; 820 ; 920) sont propres à être configurés en maître ou en esclave, et **en ce que** le système (10 ; 810 ; 910) ne comprend qu'un seul organe de commande configuré en maître (20A ; 820A ; 920A).

4. Système selon la revendication 3, **caractérisé en ce que** l'organe de commande configuré en maître (820A ; 920A) est connecté à un compteur électrique (836 ; 936), et **en ce qu'**en fonction d'informations reçues du compteur électrique (836 ; 936), l'organe de commande configuré en maître (820A ; 920A) est propre à communiquer avec les organes de commande configurés en esclave (820B ; 920B) afin de modifier la puissance maximale (P1 max) consommable par l'installation en modifiant la répartition de la puissance maximale (P1 max).

5. Système selon l'une des revendications précédentes, **caractérisé en ce qu'**il comprend une liaison électrique bidirectionnelle (834) entre chaque borne de charge (818) et chaque organe de commande (820) correspondant, et **en ce que** la borne de charge (818) est propre à indiquer à l'organe de commande (820) correspondant qu'un véhicule électrique (812) lui est raccordé et que le véhicule électrique (812) requiert la charge de sa batterie (19 ; 819 ; 919).

6. Système selon l'une des revendications 1 à 3, **caractérisé en ce que** chaque organe de commande (20) comprend un capteur de courant (24) propre à mesurer le courant traversant la ligne électrique (22) correspondante et à détecter la connexion d'un véhicule (12) à la borne de charge (18) correspondante et la charge dudit véhicule (12) en fonction de la valeur dudit courant.

7. Système selon l'une des revendications précédentes, **caractérisé en ce que** chaque borne de charge (918) comprend l'organe de commande (920) correspondant.

8. Procédé de répartition de la puissance électrique délivrée par une alimentation électrique (14; 814; 914) d'un système (10; 810; 910) de charge électrique d'une pluralité de véhicules électriques (12 ; 812 ; 912), l'alimentation électrique (14 ; 814 ; 914) étant propre à délivrer une puissance électrique maximale (P1 max), le système de charge (10 ; 810 ; 910) comprenant : une pluralité de bornes de charge (18 ; 818 ; 918), chacune étant propre à être connectée à un véhicule électrique (12 ; 812 ; 912) et à recharger une batterie (19 ; 819 ; 919) dudit véhicule électrique, ainsi qu'à délivrer plusieurs niveaux de puissance électrique (P1, P2), chaque borne de charge (18 ; 818 ; 918) étant connectée, via une ligne électrique (22 ; 822 ; 922) correspondante, à l'alimentation électrique (14 ; 814 ; 914), et pour chaque borne de charge (18 ; 818 ; 918), un organe (20 ; 820 ; 920) de commande du niveau de puissance électrique (P1, P2) délivrée par la borne de charge (18 ; 818 ; 918) à un véhicule électrique (12 ; 812 ; 912) connecté à celle-ci,
le procédé comprenant les étapes suivantes :
- a) la transmission (300, 310, 400, 424) par chaque organe de commande (20 ; 820 ; 920) d'un signal de commande (S1) à la borne de charge (18; 818; 918) correspondante, ledit niveau de puissance électrique (P1, P2) délivré étant fonction dudit signal de commande (S1),
- b) l'établissement d'une communication (302, 304, 312, 314, 316, 318, 320, 402, ..., 416, 420) entre les organes de commande (20 ; 820 ; 920) via des liaisons de communication (30 ; 830 ; 930) ;
- c) la commande (450) par les organes de commandes (20 ; 820 ; 920) de la répartition de la puissance maximale (P1max) entre les bornes de charge (18 ; 818 ; 918) en fonction du temps et du nombre de véhicules électriques (12 ; 812 ; 912) connectés aux bornes de charge (18 ; 818 ; 918) et requérant une charge,
dans lequel au cours de l'étape b) des jetons de charge (J3) sont générés, en ce qu'au cours des étapes b) et c) les jetons de charge (J3) circulent entre les organes de commande (20 ; 820 ; 920) sur les liaisons de communication (30 ; 830 ; 930), en ce qu'à chaque jeton de charge (J3) est associée une puissance partielle (P'), correspondant à une subdivision de la puissance maximale (P1 max), la somme des puissances partielles (P') associées aux jetons de charge (J3) étant inférieure ou égale à la puissance maximale (P1 max),
dans lequel chaque organe de commande (20 ; 820 ; 920) est relié, via les liaisons de communication (30 ; 830 ; 930), à deux organes de commande (20 ; 820 ; 920), l'ensemble des organes de commande (20 ; 820 ; 920) formant une liaison chainée, correspondant à une boucle de communication fermée,
dans lequel au cours des étapes b) et c), les jetons de charge (J3) circulent dans un sens unique entre les organes de commande (20) via les liaisons de communication (30 ; 830 ; 930),
**caractérisé en ce qu'**à chaque jeton de charge (J3) est associé un temps d'allocation (Ta), correspondant au temps pendant lequel chaque organe de commande (20 ; 820 ; 920) est propre à utiliser et à conserver le jeton de charge lorsqu'il le reçoit (J3),
**en ce qu'**au cours de l'étape c), si un organe de commande (20 ; 820 ; 920) détecte le démarrage de la charge d'une batterie d'un véhicule électrique (12) connecté à la borne de charge (18) correspondante ou la fin de la charge de la batterie dudit véhicule électrique (12), un jeton de synchronisation (J4) est transmis par l'organe de commande (20 ; 820 ; 920) aux autres organes de commande (20 ; 820 ; 920), le jeton de synchronisation (J4) circulant dans un sens unique entre les organes de commande (20 ; 820 ; 920),
et **en ce que** lors de la réception du jeton de synchronisation (J4) les organes de commande (20 ; 820 ; 920) qui détiennent un jeton de charge (J3) réinitialisent le temps d'allocation (Ta) à un temps de latence (TI) et conservent encore le jeton de charge (J3) pendant le temps de latence (TI), le jeton de synchronisation (J4) étant transmis d'organe de commande (20 ; 820 ; 920) en organe de commande.

9. Procédé selon la revendication 8, **caractérisé en ce qu'**au cours de l'étape a) chaque organe de commande (20 ; 820 ; 920) commande la borne de charge (18 ; 818 ; 918) correspondante via le signal de commande (S1) de manière à ce que la borne de charge (18; 818; 918) correspondante délivre au moins une puissance électrique minimale (P1) lorsqu'un véhicule (12 ; 812 ; 912) est connecté à celle-ci et requiert la charge de sa batterie (19 ; 819 ; 919).

10. Procédé selon la revendication 8 ou 9, **caractérisé en ce qu'**au cours de l'étape c), lorsqu'un organe de commande (20 ; 820 ; 920) reçoit un jeton de charge (J3), il utilise le jeton de charge (J3) reçu seulement s'il utilise déjà un nombre de jetons de charge (J3) inférieur à un nombre maximal autorisé et lorsque la borne de charge (18 ; 818 ; 918) correspondante est connectée à un véhicule électrique (12 ; 812 ; 912) qui requiert la charge de sa batterie (19 ; 819 ; 919), et **en ce que** dans le cas contraire l'organe de commande (20 ; 820 ; 920) transmet le jeton de charge (J3) à un autre organe de commande (20 ; 820 ; 920) via les liaisons de communication (30 ; 830 ; 930).

11. Procédé selon la revendication 10, **caractérisé en ce que** lorsqu'au cours de l'étape c) un organe de commande (20 ; 820 ; 920) utilise un jeton de charge (J3), alors il le conserve pendant un temps d'allocation (Ta) prédéterminé avant de le retransmettre à un autre organe de commande (20 ; 820 ; 920) via les liaisons de communication (30 ; 830 ; 930) et il alloue, via le signal de commande (S1), la puissance partielle correspondante (P'), à la borne de charge (18 ; 818 ; 918) correspondante pendant le temps d'allocation (Ta).

12. Procédé selon l'une quelconque des revendications 8 à 11, **caractérisé en ce que** le jeton de synchronisation (J4) est détruit par l'organe de commande (20), qui a généré le jeton de synchronisation (J4), lorsqu'il reçoit le jeton de synchronisation (J4).

## Patentansprüche

1. System zum elektrischen Laden (10, 810, 910) einer Mehrzahl von Elektrofahrzeugen (12, 812, 912), wobei das System aufweist:
- eine Stromversorgung (14, 814, 914), die geeignet ist, eine maximale elektrische Leistung (P1max) auszugeben,
- eine Mehrzahl von Ladeanschlüssen (18, 818, 918), von denen jeder geeignet ist, mit einem Elektrofahrzeug (12, 812, 912) verbunden zu sein und eine Batterie (19, 819, 919) des Elektrofahrzeugs aufzuladen sowie mehrere elektrische Leistungspegel (P1, P2) auszugeben, wobei jeder Ladeanschluss (18, 818, 918) über eine jeweilige elektrische Leitung (22, 822, 922) mit der Stromversorgung (14, 814, 914) verbunden ist,
- für jeden Ladeanschluss (18, 818, 918) ein Mittel (20, 820, 920) zum Steuern des elektrischen Leistungspegels (P1, P2), der von dem Ladeanschluss (18, 818, 918) an das Elektrofahrzeug (12, 812, 912) ausgegeben wird, das mit diesem verbunden ist, wobei das Steuermittel (20, 820, 920) geeignet ist, ein Steuersignal (S1) an den korrespondierenden Ladeanschluss (18, 818, 918) zu übermitteln, wobei der ausgegebene elektrische Leistungspegel (P1, P2) von dem Steuersignal (S1) abhängt,
wobei die Steuermittel (20, 820, 920) durch Kommunikationsverbindungen (30, 830, 930) miteinander verbunden sind, dass mindestens eines der Steuermittel Lade-Wertmarken (J3) erzeugt, die geeignet sind, auf den Kommunikationsverbindungen (30, 830, 130) zwischen den Steuermitteln (20, 820, 920) zu zirkulieren, wobei mit jeder Lade-Wertmarke (J3) eine Teilleistung (P') verknüpft ist, die einer Unterteilung der maximalen Leistung (P1max) entspricht, und wobei die Summe der Teilleistungen (P'), die mit den Lade-Wertmarken (J3) verknüpft sind, kleiner oder gleich der maximalen Leistung (P1max) ist, dass die Steuermittel geeignet sind, mithilfe der Lade-Wertmarken (J3) die Verteilung der maximalen Leistung (P1max) zwischen den Ladeanschlüssen in Abhängigkeit von der Zeit und der Anzahl von Elektrofahrzeugen (12, 812, 912) zu steuern, die mit den Ladeanschlüssen (18, 818, 918) verbunden sind und ein Aufladen benötigen,
wobei jedes Steuermittel (20, 820, 920) über die Kommunikationsverbindungen (30, 830, 930) mit zwei Steuermitteln (20, 820, 920) verbunden ist, wobei die Gesamtheit der Steuermittel (20, 820, 920) eine verkettete Verbindung bildet, die einer geschlossenen Kommunikationsschleife entspricht,
wobei die Lade-Wertmarken (J3) angepasst sind, um über die Kommunikationsverbindungen (30, 830, 930) in einer einzigen Richtung zwischen den Steuermitteln (20, 820, 920) zu zirkulieren,
**dadurch gekennzeichnet,**
**dass** mit jeder Lade-Wertmarke (J3) eine Zuordnungszeit (Ta) verknüpft ist, die der Zeit entspricht, während der jedes Steuermittel (20, 820, 920) geeignet ist, die Ladenmarke zu verwenden und zu speichern, wenn es diese empfängt (J3),
**dass** jedes Steuermittel (20, 820, 920) geeignet ist, das Starten des Ladens einer Batterie eines Elektrofahrzeugs (12), das mit dem korrespondierenden Ladeanschluss (18) verbunden ist, oder das Ende des Ladens der Batterie des Elektrofahrzeugs (12) zu detektieren, und das korrespondierende Steuermittel im Anschluss an das Detektieren des Startens oder des Beendens des Ladens in der Lage ist, eine Synchronisierungswertmarke (J4) an die anderen Steuermittel (20, 28, 920) zu übermitteln, wobei die Synchronisierungswertmarke (J4) in einer einzigen Richtung zwischen den Steuermitteln (20, 820, 920) zirkuliert,
und **dass** die Steuermittel (20, 820, 920), die beim Empfangen der Synchronisierungswertmarke (J4) über eine Lade-Wertmarke (J3) verfügen, in der Lage sind, die Zuordnungszeit (Ta) in eine Latenzzeit (TI) zurückzusetzen und während der Latenzzeit (TI) die Lade-Wertmarke (J3) weiter zu speichern, wobei die Synchronisierungswertmarke (J4) von Steuermittel (20, 820, 920) an Steuermittel übermittelt wird.

2. System gemäß Anspruch 1, **dadurch gekennzeichnet, dass** jedes Steuermittel (20, 820, 120) über die Kommunikationsverbindungen (30, 830, 930) mit zwei Steuermitteln (20, 820, 920) verbunden ist, wobei die Gesamtheit der Steuermittel (20, 820, 920) eine verkettete Verbindung bildet, die einer geschlossenen Kommunikationsschleife entspricht.

3. System gemäß einem der vorhergehenden Ansprüche, **dadurch gekennzeichnet, dass** die Kommunikation zwischen den Steuermitteln (20, 820, 920) eine Kommunikation des Punkt-zu-Punkt-Typs ist, dass die Steuermittel (20, 820, 920) geeignet sind, als Master oder als Slave konfiguriert zu sein, und dass das System (10, 810, 910) nur ein einziges Steuermittel aufweist, das als Master (20A, 820A, 920A) konfiguriert ist.

4. System gemäß Anspruch 3, **dadurch gekennzeichnet, dass** das Steuermittel, das als Master (820A, 920A) konfiguriert ist, mit einem elektrischen Zähler (836, 936) verbunden ist, und dass in Abhängigkeit von Informationen, die von dem elektrischen Zähler (836, 936) empfangen werden, das Steuermittel, welches als Master (820A, 920A) konfiguriert ist, geeignet ist, mit den Steuermitteln zu kommunizieren, die als Slave (820B, 920B) konfiguriert sind, um die maximale Leistung (P1max) zu modifizieren, die durch die Einrichtung verbrauchbar ist, indem die Verteilung der maximalen Leistung (P1max) modifiziert wird.

5. System gemäß einem der vorhergehenden Ansprüche, **dadurch gekennzeichnet, dass** es eine bidirektionale elektrische Verbindung (834) zwischen jedem Ladeanschluss (818) und jedem korrespondierenden Steuermittel (820) aufweist, und dass der Ladeanschluss (818) geeignet ist, dem korrespondierenden Steuermittel (820) anzuzeigen, dass ein Elektrofahrzeug (812) an dieses angeschlossen ist und das Elektrofahrzeug (812) das Aufladen seiner Batterie (19, 819, 919) benötigt.

6. System gemäß einem der Ansprüche 1 bis 3, **dadurch gekennzeichnet, dass** jedes Steuermittel (20) einen Stromfühler (24) aufweist, der geeignet ist, den Strom zu messen, der durch die korrespondierende elektrische Leitung (22) fließt, und die Verbindung eines Fahrzeugs (12) mit dem korrespondierenden Ladeanschluss (18) und das Laden des Fahrzeugs (12) in Abhängigkeit von dem Wert des Stroms zu detektieren.

7. System gemäß einem der vorhergehenden Ansprüche, **dadurch gekennzeichnet, dass** jeder Ladeanschluss (918) das korrespondierende Steuermittel (920) aufweist.

8. Verfahren zum Verteilen der elektrischen Leistung, die von einer Stromversorgung (14, 814, 914) eines Systems (10, 810, 910) zum elektrischen Laden einer Mehrzahl von Elektrofahrzeugen (12, 812, 912) ausgegeben wird, wobei die Stromversorgung (14, 814, 914) in der Lage ist, eine maximale elektrische Leistung (P1max) auszugeben, wobei das Ladesystem (10, 810, 110) aufweist: eine Mehrzahl von Ladeanschlüssen (18, 818, 918), wobei jeder geeignet ist, mit einem Elektrofahrzeug (12, 812, 912) verbunden zu sein und eine Batterie (19, 819, 919) des Elektrofahrzeugs aufzuladen sowie mehrere elektrische Leistungspegel (P1, P2) auszugeben, wobei jeder Ladeanschluss (18, 818, 918) über eine korrespondierende elektrische Leitung (22, 822, 922) mit der Stromversorgung (14, 814, 914) verbunden ist, und für jeden Ladeanschluss (18, 818, 918) ein Mittel (20, 820, 920) zum Steuern des elektrischen Leistungspegels (P1, P2), der von dem Ladeanschluss (18, 818, 918) an ein Elektrofahrzeug (12, 812, 912) ausgegeben wird, welches mit diesem verbunden ist,
wobei das Verfahren die folgenden Schritte aufweist:
- a) das Übertragen (300, 310, 400, 424) durch jedes Steuermittel (20, 820, 920) eines Steuersignals (S1) an den korrespondierenden Ladeanschluss (18, 818, 918), wobei der ausgegebene elektrische Leistungspegel (P1, P2) von dem Steuersignal (S1) abhängt,
- b) das Herstellen einer Kommunikation (302, 304, 312, 314, 316, 318, 320, 402, ..., 416, 420) zwischen den Steuermitteln (20, 820, 920) über Kommunikationsverbindungen (30, 830, 930),
- c) das Steuern (450) durch die Steuermittel (20, 820, 920) der Verteilung der maximalen Leistung (P1max) zwischen den Ladeanschlüssen (18, 818, 918) in Abhängigkeit von der Zeit und der Anzahl von Elektrofahrzeugen (12, 812, 912), die mit den Ladeanschlüssen (18, 818, 918) verbunden sind und ein Aufladen benötigen,
wobei während des Schrittes b) Lade-Wertmarken (J3) erzeugt werden, dass während der Schritte b) und c) die Lade-Wertmarken (J3) auf Kommunikationsverbindungen (30, 830, 930) zwischen den Steuermitteln (20, 820, 920) zirkulieren, dass mit jeder Lade-Wertmarke (J3) eine Teilleistung (P') verknüpft ist, die einer Unterteilung der maximalen Leistung (P1max) entspricht, wobei die Summe der Teilleistungen (P'), die mit den Lade-Wertmarken (J3) verknüpft sind, kleiner oder gleich der maximalen Leistung (P1max) ist,
wobei jedes Steuermittel (20, 820, 920) über die Kommunikationsverbindungen (30, 830, 930) mit zwei Steuermitteln (20, 820, 920) verbunden ist, wobei die Gesamtheit der Steuermittel (20, 820, 920) eine verkettete Verbindung bildet, die einer geschlossenen Kommunikationsschleife entspricht,
wobei während der Schritte b) und c) die Lade-Wertmarken (J3) in einer einzigen Richtung über die Kommunikationsverbindungen (30, 830, 930) zwischen den Steuermitteln (20) zirkulieren,
**dadurch gekennzeichnet,**
**dass** mit jeder Lade-Wertmarke (J3) eine Zuordnungszeit (Ta) verknüpft ist, die der Zeit entspricht, während der jedes Steuermittel (20, 820, 920) geeignet ist, die Lade-Wertmarke zu verwenden und zu speichern, wenn es diese empfängt (J3),
**dass** während des Schrittes c), wenn ein Steuermittel (20, 820, 920) das Starten des Ladens einer Batterie eines Elektrofahrzeugs (12), das mit dem korrespondierenden Ladeanschluss (18) verbunden ist, oder das Ende des Ladens der Batterie des Elektrofahrzeugs (12) detektiert, eine Synchronisierungswertmarke (J4) von dem Steuermittel (20, 820, 920) an die anderen Steuermittel (20, 820, 920) übermittelt wird, wobei die Synchronisierungswertmarke (J4) in einer einzigen Richtung zwischen den Steuermitteln (20, 820, 920) zirkuliert,
und **dass** beim Empfangen der Synchronisierungswertmarke (J4) die Steuermittel (20, 820, 920), die über eine Lade-Wertmarke (J3) verfügen, die Zuordnungszeit (Ta) in eine Latenzzeit (TI) zurücksetzen und die Lade-Wertmarke (J3) während der Latenzzeit (TI) weiter speichern, wobei die Synchronisierungswertmarke (J4) von Steuermittel (20, 820, 920) an Steuermittel übermittelt wird.

9. Verfahren gemäß Anspruch 8, **dadurch gekennzeichnet, dass** während des Schrittes a) jedes Steuermittel (20, 820, 920) den korrespondierenden Ladeanschluss (18, 818, 918) über das Steuersignal (S1) steuert, so dass der korrespondierende Ladeanschluss (18, 818, 918) mindestens eine minimale elektrische Leistung (P1) ausgibt, wenn ein Fahrzeug (12, 812, 912) mit diesem verbunden ist und das Aufladen seiner Batterie (19, 819, 919) benötigt.

10. Verfahren gemäß Anspruch 8 oder 9, **dadurch gekennzeichnet, dass** während des Schrittes c), wenn ein Steuermittel (20, 820, 920) eine Lade-Wertmarke (J3) empfängt, es die empfangene Lade-Wertmarke (J3) nur dann verwendet, wenn es bereits eine Anzahl von Lade-Wertmarken (J3) verwendet, die kleiner als eine maximale autorisierte Anzahl ist, und wenn der korrespondierende Ladeanschluss (18, 818, 918) mit einem Elektrofahrzeug (12, 812, 912) verbunden ist, welches das Aufladen seiner Batterie (19, 819, 919) benötigt, und dass im gegenteiligen Fall das Steuermittel (20, 820, 920) die Lade-Wertmarke (J3) über die Kommunikationsverbindungen (30, 830, 930) an ein anderes Steuermittel (20, 820, 920) übermittelt.

11. Verfahren gemäß Anspruch 10, **dadurch gekennzeichnet, dass**, wenn während des Schrittes c) ein Steuermittel (20, 820, 920) eine Lade-Wertmarke (J3) verwendet, es diese während einer vorbestimmten Zuordnungszeit (Ta) speichert, bevor es sie über die Kommunikationsverbindungen (30, 830, 930) an ein anderes Steuermittel (20, 820, 920) zurückübermittelt und über das Steuersignal (S1) die korrespondierende Teilleistung (P') während der Zuordnungszeit (Ta) an den korrespondierenden Ladeanschluss (18, 818, 918) zuweist.

12. Verfahren gemäß irgendeinem der Ansprüche 8 bis 11, **dadurch gekennzeichnet, dass** die Synchronisierungswertmarke (J4) von dem Steuermittel (20) zerstört wird, welches die Synchronisierungswertmarke (J4) erzeugt hat, wenn es die Synchronisierungswertmarke (J4) empfängt.

## Claims

1. Electric charging system (10; 810; 910) of a plurality of electric vehicles (12; 812; 912), said system comprising:
- an electric power supply (14; 814; 914) suitable for delivering a maximum electric power (P1 max),
- a plurality of charging points (18; 818; 918), each being suitable for being connected to an electric vehicle (12; 812; 912) and recharging a battery (19; 819; 919) of said electric vehicle, and delivering a plurality of electric power levels (P1, P2), each charging point (18; 818; 918) being connected, via a corresponding electric line (22; 822; 922), to the electric power supply (14; 814; 914),
- for each charging point (18; 818; 918), a device (20; 820; 920) for controlling the electric power level (P1, P2) delivered by the charging point (18; 818; 918) to the electric vehicle (12; 812; 912) connected thereto, the control device (20; 820; 920) being suitable for transmitting a control signal (S1) to the corresponding charging point (18; 818; 918), said electric power level (P1, P2) delivered being dependent on said control signal (S1),
wherein the control devices (20; 820, 920) are connected to each other by communication links (30; 830; 930), in that at least one of the control devices generates charging tokens (J3) suitable for circulating between the control devices (20; 820; 920) on the communication links (30; 830; 930), at each charging tokens (J3) being associated a partial power (P'), corresponding to a subdivision of the maximum power (P1 max) and the sum of the partial powers (P') associated with the charging tokens (J3) being less than or equal to the maximum power (P1 max), in that the control devices (20; 820, 920) are suitable for controlling, using the charging tokens, the distribution of the maximum power (P1 max) between the charging points as a function of time and the number of electric vehicles (12; 812; 912) connected to the charging points (18; 818; 918) and requiring charging,
wherein each control device (20; 820; 920) is connected, via the communication links (30; 830; 930), to two control devices (20; 820; 920), the set of control devices (20; 820; 920) forming a chained link, corresponding to a closed communication loop,
wherein the charging tokens (J3) are adapted to circulate in a single direction between the control devices (20; 820 ; 920) via the communication links (30; 830; 930),
**characterized in that** each charging token (J3) is associated with an allocation time (Ta), corresponding to the time during which each control device (20; 820 ; 920) is suitable for using and storing the charging token when it receives it,
**in that** each control device (20) is suitable for detecting the start of charging of a battery of an electric vehicle (12) connected to the corresponding charging point (18) or the end of charging of the battery of said electric vehicle (12), and following the detection of the start or the end of charging, the corresponding control device is suitable for transmitting a synchronisation token (J4) to the other control devices (20), the synchronisation token (J4) circulating in a single direction between the control devices (20),
and **in that** the control devices (20) holding a charging token (J3) when they receive the synchronisation token (J4) are suitable for resetting the allocation time (Ta) to a latency time (TI) and storing the charging token (J3) further for the latency time (TI), the synchronisation token (J4) being transmitted from control device (20) to control device (20).

2. System according to claim 1, **characterised in that** each control device (20; 820; 920) is connected, via the communication links (30; 830; 930), to two control devices (20; 820; 920), the set of control devices (20; 820; 920) forming a chained link, corresponding to a closed communication loop.

3. System according to any of the above claims, **characterised in that** the communication between the control devices (20; 820; 920) is a point-to-point type communication, **in that** the control devices (20; 820; 920) are suitable for being configured in master or slave mode, and **in that** the system (10; 810; 910) merely comprises one control device configured in master mode (20A; 820A; 920A).

4. System according to claim 3, **characterised in that** the control device configured in master mode (820A; 920A) is connected to an electric meter (836; 936), and **in that** based on information received from the electric meter (836; 936), the control device configured in master mode (820A; 920A) is suitable for communicating with the control devices configured in slave mode (820B; 920B) to modify the maximum power (P1 max) consumable by the facility by modifying the distribution of the maximum power (P1 max).

5. System according to any of the above claims, **characterised in that** it comprises a bidirectional electric link (834) between each charging point (818) and each corresponding control device (820), and **in that** the charging point (818) is suitable for indicating to the corresponding control device (820) that an electric vehicle (812) is connected thereto and that the electric vehicle (812) requires charging of its battery (19; 819; 919).

6. System according to any of claims 1 to 3, **characterised in that** each control device (20) comprises a current sensor (24) suitable for measuring the current flowing through the corresponding electric line (22) and detecting the connection of a vehicle (12) to the corresponding charging point (18) and the charging of said vehicle (12) based on the value of said current.

7. System according to any of the above claims, **characterised in that** each charging point (918) comprises the corresponding control device (920).

8. Method for distributing the electric power delivered by an electric power supply (14; 814; 914) of an electric charging system (10; 810; 910) of a plurality of electric vehicles (12; 812; 912), the electric power supply (14; 814; 914) being suitable for delivering a maximum electric power (P1max), the charging system (10; 810; 910) comprising: a plurality of charging points (18; 818; 918), each being suitable for being connected to an electric vehicle (12; 812; 912) and for recharging a battery (19; 819; 919) of said electric vehicle, and for delivering a plurality of electric power levels (P1, P2), each charging point (18; 818; 918) being connected, via a corresponding electric line (22; 822; 922), to the electric power supply (14; 814; 914), and for each charging point (18; 818; 918), a device (20; 820; 920) for controlling the electric power level (P1, P2) delivered by the charging point (18; 818; 918) to an electric vehicle (12; 812; 912) connected thereto,
the method comprising the following steps:
- a) transmission (300, 310, 400, 424) by each control device (20; 820; 920) of a control signal (S1) to the corresponding charging point (18; 818; 918), said delivered electric power level (P1, P2) being dependent on said control signal (S1),
- b) establishing communication (302, 304, 312, 314, 316, 318, 320, 402, ..., 416, 420) between the control devices (20; 820; 920) via communication links (30; 830; 930);
- c) controlling (450) by means of the control devices (20; 820; 920) the distribution of the maximum power (P1 max) between the charging points (18; 818; 918) as a function of time and the number of electric vehicles (12; 812; 912) connected to the charging points (18; 818; 918) and requiring charging,
wherein during step b) charging tokens (J3) are generated, in that during steps b) and c) the charging tokens (J3) circulate between the control devices (20; 820; 920) on the communication links (30; 830; 930), in that each charging token (J3) is associated with a partial power (P'), corresponding to a subdivision of the maximum power (P1max), the sum of the partial powers (P') associated with the charging tokens (J3) being less than or equal to the maximum power (P1max),
wherein each control device (20; 820; 920) is connected, via the communication links (30; 830; 930), to two control devices (20; 820; 920), the set of control devices (20; 820; 920) forming a chained link, corresponding to a closed communication loop,
wherein during steps b) and c), the charging tokens (J3) circulate in a single direction between the control devices (20) via the communication links (30; 830; 930),
**characterized in that** each charging token (J3) is associated with an allocation time (Ta), corresponding to the time during which each control device (20; 820 ; 920) is suitable for using and storing the charging token when it receives it,
**in that** during step c), if a control device (20) detects the start of charging of a battery of an electric vehicle (12) connected to the corresponding charging point (18) or the end of charging of the battery of said electric vehicle (12), a synchronisation token (J4) is transmitted by the control device (20) to the other control devices (20), the synchronisation token (J4) circulating in a single direction between the control devices (20),
and **in that** when receiving the synchronisation token (J4), the control devices (20) holding a charging token (J3) reset the allocation time (Ta) to a latency time (TI) and store the charging token (J3) further for the latency time (TI), the synchronisation token (J4) being transmitted from control device (20) to control device (20).

9. Method according to claim 8, **characterised in that** during step a) each control device (20; 820; 920) controls the corresponding charging point (18; 818; 918) via the control signal (S1) such that the corresponding charging point (18; 818; 918) delivers at least a minimum electric power (P1) when a vehicle (12; 812; 912) is connected thereto and requires charging of its battery (19; 819; 919).

10. Method according to claim 8 or 9, **characterised in that** during step c), when a control device (20; 820; 920) receives a charging token (J3), it uses the charging token (J3) received only if it is already using a number of charging tokens (J3) less than a maximum authorised number and when the corresponding charging point (18; 818; 918) is connected to an electric vehicle (12; 812; 912) requiring charging of its battery (19; 819; 919), and **in that** otherwise the control device (20; 820; 920) transmits the charging token (J3) to another control device (20; 820; 920) via the communication links (30; 830; 930).

11. Method according to claim 10, **characterised in that** when, during step c) a control device (20; 820; 920) uses a charging token (J3), then it stores the charging token for a predetermined allocation time (Ta) before forwarding the charging token to another control device (20; 820; 920) via the communication links (30; 830; 930) and it allocates, via the control signal (S1), the corresponding partial power (P'), to the corresponding charging point (18; 818; 918) during the allocation time (Ta).

12. Method according to any of the claims 8 to 11, **characterised in that** the synchronisation token (J4) is deleted by the control device (20), which generated the synchronisation token (J4), when it receives the synchronisation token (J4).
